# EUROPÄISCHE PATENTSCHRIFT

(11) **EP 2 837 962 B1**
(45) Veröffentlichungstag und Bekanntmachung des Hinweises auf die Patenterteilung: **11.12.2019**
(21) Anmeldenummer: 14177266.5
(22) Anmeldetag: 16.07.2014
(51) Int. Cl.: G02B 27/00, G02B 19/00

(54) **Verfahren zum Berechnen der Oberflächen von optischen Linsen und nach dem Verfahren berechnete Projektionslinse für ein Lichtmodul eines Kraftfahrzeugscheinwerfers**
Method for calculating the surfaces of optical lenses and projection lens calculated according to the method for a light module of a motor vehicle headlight
Procédé destiné à calculer des surfaces de lentilles optiques et lentille de projection calculée selon le procédé pour un module d'éclairage d'un phare de véhicule automobile

(30) Priorität: 12.08.2013 DE 102013215897
(43) Veröffentlichungstag der Anmeldung: 18.02.2015
(73) Patentinhaber: Automotive Lighting Reutlingen GmbH, 72762 Reutlingen (DE)
(72) Erfinder: Wiersdorff, Steffen, 72555 Metzingen (DE); Kellermann, Hermann, 72762 Reutlingen (DE)
(74) Vertreter: DREISS Patentanwälte PartG mbB

(56) Entgegenhaltungen:
- DE-A1-102008 030 597
- US-A1- 2005 086 032
- US-A1- 2007 291 499

## Beschreibung

Die vorliegende Erfindung betrifft ein Verfahren zum Berechnen der Oberflächen von optischen Linsen. Außerdem betrifft die Erfindung ein Computerprogramm zur Realisierung des Verfahrens.

Die optische Linse ist bspw. eine Projektionslinse für ein Lichtmodul eines Kraftfahrzeugscheinwerfers. Die Projektionslinse ist zum Projizieren zumindest eines Teils des von einer Lichtquelle des Lichtmoduls ausgesandten Lichts auf eine Fahrbahn vor das mit dem Scheinwerfer ausgestattete Kraftfahrzeug zur Erzeugung einer abgeblendeten Lichtverteilung ausgebildet. Solche Projektionslinsen werden in Lichtmodulen für Kraftfahrzeugscheinwerfer eingesetzt. Das Lichtmodul umfasst eine Lichtquelle zum Aussenden von Licht und die Projektionslinse zum Projizieren zumindest eines Teils des von der Lichtquelle ausgesandten Lichts auf eine Fahrbahn vor das mit dem Scheinwerfer ausgestattete Kraftfahrzeug zur Erzeugung einer abgeblendeten Lichtverteilung. Derartige Lichtmodule werden in Kraftfahrzeugscheinwerfern eingesetzt. Der Scheinwerfer umfasst das Lichtmodul mit einer Lichtquelle zum Aussenden von Licht und eine Projektionslinse zum Projizieren zumindest eines Teils des von der Lichtquelle ausgesandten Lichts auf eine Fahrbahn vor das mit dem Scheinwerfer ausgestattete Kraftfahrzeug zur Erzeugung einer abgeblendeten Lichtverteilung.

Sowohl aus der US 2007/291499 A1 als auch aus der DE 10 2008 030 597 A1 ist eine Projektionslinse für ein Lichtmodul eines Kraftfahrzeugscheinwerfers bekannt, wobei die Projektionslinse zum Projizieren zumindest eines Teils des von einer Lichtquelle des Lichtmoduls ausgesandten Lichts auf eine Fahrbahn vor das mit dem Scheinwerfer ausgestattete Kraftfahrzeug zur Erzeugung einer abgeblendeten Lichtverteilung ausgebildet ist. Es ist weder in der US 2007/291499 A1 noch in der DE 10 2008 030 597 A1 genau angegeben, nach welchem Verfahren die Oberflächen der Projektionslinse berechnet werden. Diesen Druckschriften kann jeweils auch ein Lichtmodul mit einer solchen Projektionslinse und ein Kraftfahrzeugscheinwerfer mit einem solchen Lichtmodul entnommen werden.

Im Bereich der Kraftfahrzeugbeleuchtungseinrichtungen, insbesondere im Bereich der Kraftfahrzeugscheinwerfer, kann man prinzipiell zwei verschiedene Typen von Lichtmodulen unterscheiden. Bei sogenannten Reflexionsmodulen wird die gewünschte Lichtverteilung auf der Fahrbahn vor dem Kraftfahrzeug mittels eines Reflektors erzeugt, der das von der Lichtquelle ausgesandte Licht auf die Fahrbahn zur Erzeugung der gewünschten abgeblendeten Lichtverteilung reflektiert.

Bei Projektionsmodulen ist zusätzlich eine Projektionslinse im Strahlengang angeordnet, welche das von dem Reflektor oder einer anderen Art von Primäroptik gebündelte Licht zur Erzeugung der gewünschten abgeblendeten Lichtverteilung auf die Fahrbahn vor das Kraftfahrzeug projiziert. Zur Erzeugung der abgeblendeten Lichtverteilung ist üblicherweise zwischen der Primäroptik und der Projektionslinse eine Blendenanordnung angeordnet, wobei eine Oberkante der Blendenanordnung zur Erzeugung einer Helldunkelgrenze der abgeblendeten Lichtverteilung von der Projektionslinse auf der Fahrbahn vor dem Kraftfahrzeug abgebildet wird.

Reflexionsmodule weisen aufgrund verschiedener Abstände und Perspektiven von Lichtquelle und Reflektorbereichen verschieden große Lichtquellenabbilder in der resultierenden Lichtverteilung auf. Diese unterschiedlich großen Lichtquellenabbilder lassen sich gut nutzen, um bei der Auslegung eines solchen Reflexionsmoduls die verschieden großen Lichtquellenabbilder zur Ausleuchtung unterschiedlicher Bereiche der resultierenden Lichtverteilung zu nutzen. So ist es beispielsweise bekannt, kleine Lichtquellenabbilder zur Bildung der Helldunkelgrenze der abgeblendeten Lichtverteilung und zur Erzielung einer möglichst großen Reichweite der Lichtverteilung zu verwenden, indem die kleinen Lichtquellenabbilder in eine Position der Lichtverteilung möglichst dicht unterhalb der Helldunkelgrenze reflektiert werden. Große Lichtquellenabbilder werden hingegen häufig zur Ausleuchtung des Vorfelds oder Nahbereichs vor dem Fahrzeug und zur Seitenausleuchtung in der resultierenden Lichtverteilung herangezogen. Insbesondere der Wunsch, Licht in die Ferne unmittelbar unterhalb der Helldunkelgrenze zu bringen, um eine möglichst große Reichweite der resultierenden Lichtverteilung zu erzielen, ist nur mit möglichst kleinen Lichtquellenabbildern möglich.

Bei Projektionsmodulen werden zur Bündelung des von einer Lichtquelle ausgesandten Lichts Reflektoren oder andere Arten von Primäroptiken eingesetzt. So ist es beispielsweise bekannt, Linsensysteme oder sogenannte Vorsatzoptiken als Primäroptiken einzusetzen. Vorsatzoptiken bestehen üblicherweise aus einem transparenten Glas- oder Kunststoffmaterial, in das von der Lichtquelle ausgesandtes Licht eingekoppelt wird. Das eingekoppelte Licht wird zumindest teilweise an äußeren Grenzflächen totalreflektiert und tritt dann aus der Vorsatzoptik aus. Der nicht totalreflektierte Teil des eingekoppelten Lichts tritt vorzugsweise direkt wieder aus der Vorsatzoptik aus. Die Bündelung des Lichts erfolgt dabei durch Brechung an der Lichteintritts- und/oder Lichtaustrittsfläche und durch die Totalreflexion an den Grenzflächen der Vorsatzoptik.

Ferner werden bei Projektionsmodulen Sekundäroptiken zum Abbilden des gebündelten Lichts auf der Fahrbahn und zur Erzeugung der gewünschten abgeblendeten Lichtverteilung herangezogen. Die Sekundäroptiken können als Reflektor oder als Projektionslinse ausgebildet sein. Die Projektionslinse kann die von der Primäroptik durch das gebündelte Licht in einer Zwischenebene erzeugte Zwischenlichtverteilung in der Ferne abbilden oder als ein sogenanntes direkt abbildendes System ausgebildet sein.

Bei direkt abbildenden Projektionsmodulen wird eine Lichtquelle, die beispielsweise eine oder mehrere Leuchtdioden (LEDs) umfassen kann, über die Projektionslinse auf der Fahrbahn abgebildet, ohne dass es weiterer optisch aktiver Flächen zur Bündelung oder Umlenkung der Lichtstrahlen bedarf. Solche direkt abbildenden Projektionsmodule erzeugen durch geeignete Form der Projektionslinse Lichtverteilungen, die sowohl in horizontaler als auch in vertikaler Richtung eine definierte Ausdehnung aufweisen.

Aus dem Stand der Technik sind zudem Projektionslinsen bekannt, die derart ausgebildet sind, dass sie eine abgeblendete Lichtverteilung mit einer im Wesentlichen horizontalen Helldunkelgrenze ohne zusätzliche im Strahlengang angeordnete Blendenanordnung erzeugen können. Die Helldunkelgrenze kann dabei den ECE-, den SAE- oder beliebig anderen gesetzlichen Anforderungen genügen.

Die aus dem Stand der Technik zur Verwendung in Lichtmodulen eines Kraftfahrzeugscheinwerfers vorgesehenen Projektionslinsen sind so geformt, dass eine Seite der Linsen entweder plan, konvex oder konkav geformt ist. Dabei ist die Divergenz der Lichtstrahlen, welche eine bekannte Projektionslinse verlassen, über die gesamte Lichtaustrittsfläche der Projektionslinse annähernd gleich. Die Abbilder der Lichtquelle einer solchen Projektionslinse weisen auf einem in einem Abstand zu dem Lichtmodul bzw. zu dem Kraftfahrzeugscheinwerfer angeordneten Messschirm alle eine ähnliche Größe auf. Dadurch unterscheiden sich die Projektionsmodule deutlich von den Reflexionsmodulen.

Die von einem Projektionsmodul erzeugten annähernd gleich großen Lichtquellenabbilder haben zur Folge, dass beim Erzeugen der resultierenden Lichtverteilung eines solchen Projektionsmoduls nicht die Möglichkeit besteht, unterschiedlich große Lichtquellenabbilder in verschiedene Bereiche der resultierenden Lichtverteilung zu lenken. Insbesondere gibt es keine besonders kleinen Abbilder, die für die Erzeugung einer hohen Reichweite der Lichtverteilung herangezogen werden können, und gibt es keine besonders großen Lichtquellenabbilder, die zur Ausleuchtung des Vorfelds oder einer Seitenausleuchtung im Bereich der Lichtverteilung herangezogen werden könnten. Damit die resultierende Lichtverteilung des Projektionsmoduls dennoch die geforderten Kundenanforderungen erfüllt, ist es aus dem Stand der Technik bekannt, die in etwa gleich großen Lichtquellenabbilder in die gewünschten Bereiche der Lichtverteilung zu lenken, ohne deren Größe zu beeinflussen. Insbesondere ist bei den bekannten Projektionsmodulen eine zufriedenstellende Vorfeldausleuchtung nur mittels eines Absenkens der verhältnismäßig kleinen Lichtquellenabbilder möglich. Das bedeutet, dass Lichtquellenabbilder von einem Bereich unmittelbar unterhalb der Helldunkelgrenze in das Vorfeld der Lichtverteilung nach unten verschoben werden müssen. Das führt dazu, dass die Reichweite und der Gradient an der Helldunkelgrenze geschwächt werden.

Es wäre zwar theoretisch möglich, über den Abstand zwischen der Lichtquelle und der Projektionslinse den Abbildungsmaßstab zu verändern. Um kleine Lichtquellenabbilder zu erhalten, müsste dann der Abstand vergrößert werden. Dies würde allerdings dazu führen, dass die Projektionslinse auch quer zu einer Abstrahlrichtung vergrößert werden müsste, um den gleichen Raumwinkel bezüglich der Lichtquelle aufzunehmen. Alternativ würde bei gleichen Abmessungen quer zum Abstrahlwinkel weniger Lichtmenge durch die Projektionslinse hindurchtreten, was die Effizienz des Projektionsmoduls schwächen würde.

Ausgehend von dem beschriebenen Stand der Technik liegt der vorliegenden Erfindung die Aufgabe zugrunde, ein Verfahren zum Berechnen der Oberflächen von optischen Linsen, eine Projektionslinse, ein Projektionsmodul und/oder einen Kraftfahrzeugscheinwerfer dahingehend auszugestalten und weiterzubilden, dass abbildende Systeme mit unterschiedlichen Abbildungsmaßstäben erzeugt werden können, so dass unterschiedlich große Lichtquellenabbilder zur Verfügung stehen, die dann gezielt in die gewünschten Bereiche der resultierenden Lichtverteilung gelenkt werden können. Insbesondere wäre es wünschenswert, auch bei einem direkt abbildenden Projektionsmodul kleinere Lichtquellenabbilder zum Ausleuchten des Bereichs der Lichtverteilung unmittelbar unterhalb der Helldunkelgrenze und größere Lichtquellenabbilder zum Ausleuchten eines Bereichs der Lichtverteilung im Vorfeld und/oder in den Seitenbereichen der Lichtverteilung zur Verfügung zu haben.

Zur Lösung dieser Aufgabe wird ein Verfahren der eingangs genannten Art vorgeschlagen, das gekennzeichnet ist durch
a) Vorgeben einer gewünschten Lichtverteilung, die durch durch die berechnete Linse hindurchtretendes Licht erzeugt werden soll,
b) Deformieren einer erste Oberfläche der Linse mit dem Ziel, unterschiedlich große Lichtquellenabbilder in der Lichtverteilung zu erzeugen,
c) Deformieren einer der ersten Oberfläche gegenüberliegenden zweiten Oberfläche der Linse mit dem Ziel, alle Lichtquellenabbilder so zu verschieben, dass sie mit ihrem jeweils höchsten Punkt unmittelbar an oder auf einer Helldunkelgrenze einer resultierenden Lichtverteilung liegen, die durch die Linse mit den deformierten Oberflächen erzielt wird,
d) Ermitteln einer Güte der resultierenden Lichtverteilung durch einen Vergleich mit der vorgegebenen Lichtverteilung,
e) falls die Güte oberhalb eines vorgebbaren Grenzwerts liegt, Abspeichern der berechneten Oberflächen für die Linse und Beenden des Verfahrens,
f) sonst erneutes Deformieren der ersten Oberfläche mit dem Ziel, eine größere oder kleiner Bündelung der Lichtquellenabbilder in der Lichtverteilung zu erzeugen,
g) erneutes Deformieren der zweiten Oberfläche mit dem Ziel, alle Lichtquellenabbilder so zu verschieben, dass sie mit ihrem jeweils höchsten Punkt an oder auf der Helldunkelgrenze der resultierenden Lichtverteilung liegen,
h) Wiederholen der Schritte f) und g) so lange bis die Güte der resultierenden Lichtverteilung oberhalb des Grenzwerts liegt, und
i) Abspeichern der berechneten Oberflächen für die Linse und Beenden des Verfahrens.

Die gewünschte Lichtverteilung kann im Schritt a) durch gesetzliche Regelungen (z.B. ECE-, SAE- oder eine andere Regelungen) oder aber durch den Wunsch eines Kunden (z.B. eines Scheinwerferherstellers oder eines Kraftfahrzeugherstellers) vorgegeben sein. So kann es bspw. Kundenwunsch sein, eine den gesetzlichen Anforderungen entsprechende abgeblendete Lichtverteilung mit einer besonders scharf abgegrenzten Helldunkelgrenze und/oder einer besonders dicht an das Fahrzeug heranreichenden Vorfeldausleuchtung und/oder einem oder mehreren besonders hell ausgeleuchteten Seitenbereichen zu erzielen. Dies kann mit einem Lichtmodul bzw. Scheinwerfer mit einer Projektionslinse, deren Oberflächen nach dem erfindungsgemäßen Verfahren berechnet worden sind, erzielt werden.

Der Schritt b) wird an einem Rechner anhand eines mathematischen Modells der zu berechnenden Linse simuliert. Dabei werden vorzugsweise diskrete Punkte der Linsenoberflächen derart berechnet bzw. variiert, dass die durch die deformierten Bereiche der Linse hindurchtretenden Lichtstrahlen größere bzw. kleinere Lichtquellenabbilder erzeugen. Die Größe der Lichtquellenabbilder kann ebenfalls anhand eines mathematischen Models des Strahlengangs für die deformierte Linse simuliert werden. Die Deformation der ersten Linsenoberfläche ist die Voraussetzung dafür, dass in der resultierenden Lichtverteilung das Vorfeld und/oder Seitenbereiche der Lichtverteilung gut ausgeleuchtet werden können und gleichzeitig aber noch genügend Licht zur Erzeugung einer scharf abgegrenzten Helldunkelgrenze zur Verfügung steht. Das wir dadurch erzielt, dass nicht - wie im Stand der Technik bisher üblich - die Lichtquellenabbilder einfach in das Vorfeld nach unten abgesenkt bzw. in die Seitenbereiche seitlich bewegt werden. Dabei würde das in das Vorfeld bzw. in die Seitenbereiche bewegte Licht zur Erzeugung der Helldunkelgrenze fehlen. Vielmehr wird bei der Erfindung eine erste Linsenoberfläche derart deformiert, dass unterschiedlich große Lichtquellenabbilder erzeugt werden.

In dem Schritt c) wird dann die andere Linsenoberfläche derart deformiert, dass alle Lichtquellenabbilder jeweils mit ihrem höchsten Punkt dicht an oder auf der Helldunkelgrenze liegen. Auch dies wird im Rahmen einer Simulation anhand eines mathematischen Modells der deformierten Linse berechnet. Die Lichtquellenabbilder werden also alle so dicht wie möglich an die Helldunkelgrenze herangeführt. Die großen Lichtquellenabbilder reichen mit ihren unteren Bereichen bis in das Vorfeld hinein. Der untere Teil der großen Lichtquellenabbilder kann also zur Vorfeldausleuchtung genutzt werden. Gleichzeitig sind aber die oberen Bereiche der großen Abbilder an oder auf der Helldunkelgrenze angeordnet, so dass dort kein Licht verloren geht, wie dies beim Stand der Technik durch Absenken der gesamten Lichtquellenabbilder in das Vorfeld der Fall ist.

Dabei kann Art und Umfang der Deformation der Linsenoberflächen durch äußere Randbedingungen vorgegeben sein. Diese Randbedingungen können bspw. bauliche Vorgaben (z. B. Platz) in dem Lichtmodul oder dem Scheinwerfer sein. So kann eine Deformation der Linsenoberflächen im unteren Bereich der Linse bei tief im Scheinwerfer angeordneten Lichtmodulen derart vorgenommen werden, dass in diesem Bereich kleine Lichtquellenabbilder erzeugt werden. Durch die weniger stark divergierenden Lichtbündel trifft weniger Licht bspw. auf einen Abdeckrahmen, so dass mehr Licht für die Erzeugung der resultierenden Lichtverteilung zur Verfügung steht und gleichzeitig störende Reflexe reduziert werden. Ein Ansatz, die Oberflächen im oberen und im unteren Bereich der Linse zu deformieren, erlaubt die Erzeugung einer Lichtverteilung, wie sie bisher nur durch Reflexionssysteme realisiert werden konnte. Dabei werden bevorzugt Bereiche aus denen ursprünglich große Lichtquellenabbilder entstehen derart deformiert, dass die Lichtquellenabbilder noch größer werden. Ein analoger Ansatz kann zur Erzeugung noch kleinerer Lichtquellenabbilder aus ursprünglich kleinen Abbildern verwendet werden.

Im Schritt d) kann die Güte der resultierenden Lichtverteilung auf beliebige Weise durch einen Vergleich mit der zuvor im Schritt a) vorgegebenen Lichtverteilung festgestellt werden. So könnte man bspw. überprüfen, ob das Maximum der Intensitätsverteilung an einer vorgegebenen Stelle in der Lichtverteilung, insbesondere nahe genug an der Helldunkelgrenze, liegt. Ebenso könnte überprüft werden, ob die Intensitätswerte der resultierenden Lichtverteilung im Vorfeld und/oder Seitenbereichen der Lichtverteilung die Vorgaben aus der vorgegebenen Lichtverteilung erfüllen. Ferner ist es denkbar zu prüfen, ob die Intensitätswerte oberhalb der Helldunkelgrenze ein gesetzlich vorgegebenes Maximum nicht überschreiten. Die Bewertung der resultierenden Lichtverteilung kann also anhand einer Vielzahl unterschiedlicher Kriterien erfolgen. Die Ermittlung der Güte der Lichtverteilung kann manuell oder automatisiert erfolgen.

Falls die Güte der resultierenden Lichtverteilung noch nicht den vorgegebenen Ansprüchen genügt (vgl. Schritt f), werden in einem iterativen Verfahren (vgl. Schritte g) und h) die Oberflächen der zu berechnenden Linse immer weiter so deformiert, dass einerseits unterschiedlich große Lichtquellenabbilder erzeugt werden und die Lichtquellenabbilder alle mit ihren obersten Punkten an oder auf der Helldunkelgrenze liegen und dass andererseits aber die aus der Überlagerung der einzelnen Lichtquellenabbilder gebildete resultierende Lichtverteilung der vorgegebenen Lichtverteilung möglichst gut entspricht. Zur Ermittlung der Güte der resultierenden Lichtverteilung kann auch einfach die Anzahl der ausgeführten Iterationsdurchläufe gezählt werden. Gemäß einer bevorzugten Ausführungsform der Erfindung kann das iterative Verfahren nach einer vorgegebenen Anzahl von Iterationsdurchläufen abgebrochen werden.

So ist es bspw. denkbar, bei einem Intensitätsmaximum der resultierenden Lichtverteilung, das nicht nahe genug an der Helldunkelgrenze liegt, noch kleinere Lichtquellenabbilder zu erzeugen, indem die Divergenz der Lichtbündel für kleine Lichtquellenabbilder noch weiter verringert wird. Ein Maximum der kleineren Abbilder kann dann noch näher an die Helldunkelgrenze herangeführt werden, sodass das Maximum der resultierenden Lichtverteilung insgesamt näher an die Helldunkelgrenze rückt. Ob die während es iterativen Verfahrens der Schritte g) und h) erzielte Deformationen der Linsenoberflächen den gewünschten Effekt erzielen wird dann durch Überprüfen der Güte der resultierenden Lichtverteilung in dem Schritt h) überprüft.

Sobald ein Abbruchkriterium erfüllt ist, nämlich wenn die Güte der resultierenden Lichtverteilung einen vorgebbaren Grenzwert erfüllt, wenn also die resultierende Lichtverteilung der vorgegebenen Lichtverteilung in dem gewünschten Maße entspricht, werden die für die Oberflächen der Linse berechneten Werte abgespeichert. Als Abbruchkriterium kann auch das Erreichen einer vorgegebenen Anzahl an Iterationsdurchläufen definiert werden. Die abgespeicherten Werte können zur Herstellung einer den Werten entsprechenden Linse oder für Simulationszwecke, bspw. zur Simulation des Strahlenverlaufs eines mit der Linse ausgestatteten Lichtmoduls, oder als CAD-Daten bspw. beim Entwurf eines mit der Linse ausgestatteten Lichtmoduls oder Scheinwerfers genutzt werden.

Es wird vorgeschlagen, dass die erste Oberfläche eine Lichtaustrittsfläche und die zweite Oberfläche eine Lichteintrittsfläche ist. Selbstverständlich kann das Verfahren auch ausgeführt werden, wenn zunächst die Lichteintrittsfläche zur Variation der Größe der Lichtquellenabbilder und danach die Lichtaustrittsfläche zur Positionierung der höchsten Punkte der Lichtquellenabbilder an oder auf der Helldunkelgrenze deformiert wird.

Eine auf diese Weise berechnete Projektionslinse ist dadurch gekennzeichnet, dass die abbildenden Eigenschaften der Projektionslinse derart gewählt sind, dass zur Erzeugung der abgeblendeten Lichtverteilung kleine Lichtquellenabbilder unmittelbar unterhalb einer Helldunkelgrenze der Lichtverteilung und große Lichtquellenabbilder bis in ein Vorfeld und/oder einen Seitenbereich der Lichtverteilung ragen.

Mit Hilfe der nach dem erfindungsgemäßen Verfahren berechneten Projektionslinse können abbildende Systeme mit verschiedenen Abbildungsmaßstäben erzeugt werden. Dazu wird statt einer typischen abbildenden Projektionslinse eine Projektionslinse verwendet, die nur einen kleinen Bereich der von einer Primäroptik erzeugten Zwischenlichtverteilungen scharf abbildet und die Zwischenlichtverteilungen aus anderen Bereichen aufgrund eines über die Vertikalschnittfläche der Projektionslinse gesehen örtlich unterschiedlichen, sich ortsabhängig ändernden Abbildungsmaßstabes unscharf abbildet. Dies führt dazu, dass mit Hilfe der nach dem erfindungsgemäßen Verfahren berechneten Projektionslinse unterschiedlich große Lichtquellenabbilder erzeugt werden. Zur Erzeugung eines Maximums und/oder eines lokalen Gradienten im Bereich der Helldunkelgrenze einer abgeblendeten Lichtverteilung werden innerhalb der Lichtverteilung kleine Lichtquellenabbilder herangezogen. Diese können sehr genau lokal Licht konzentrieren. Zur Erzeugung von gleichförmigen Lichtverteilungen, speziell im Vorfeldbereich oder beim Seitenauslauf einer Lichtverteilung, werden größere Lichtquellenabbilder herangezogen. Die vorliegende Erfindung ermöglicht es, Projektionssysteme und Kraftfahrzeugscheinwerfer auszugestalten, die sowohl kleine als auch große Lichtquellenabbilder mit einer einzigen Projektionslinse erzeugen können.

Eine solche Projektionslinse kann mit Hilfe eines neuartigen Computerprogramms berechnet werden. Dieses berechnet, ähnlich wie dies bereits für sog. Freiformreflektoren bekannt ist, für gegebene konstruktive Bedingungen eines Projektionsmoduls die Form einer Projektionslinse, damit eine gewünschte Lichtverteilung mit einer gewünschten Anzahl und Position von verhältnismäßig kleinen und größeren Lichtquellenabbildern erzeugt werden kann.

Die konstruktiven Bedingungen eines Projektionsmoduls sind bspw. der Abstand zwischen der Lichtquelle und der Projektionslinse, ein Durchmesser der Projektionslinse, eine Brennweite der Projektionslinse, eine Anordnung der Lichtquelle bezüglich eines Brennpunkts der Projektionslinse, Art, Ausgestaltung und/oder Ausrichtung der Lichtquelle. Diese und andere Bedingungen können als Randparameter vorgegeben werden und werden von dem Computerprogramm bei der weiteren Berechnung berücksichtigt. Das Computerprogramm geht aus von einer vorgegebenen Form einer Projektionslinse mit einem vorgegebenen Oberflächenverlauf der Lichteintritts- und Lichtaustrittsflächen. Dann ermittelt das Computerprogramm nach dem erfindungsgemäßen iterativen Verfahren für diskrete Punkte Werte, um die die vorgegebene Linse deformiert werden muss, damit die resultierende Lichtverteilung möglichst nah an die vorgegebene Lichtverteilung kommt. Schließlich kann zwischen den berechneten diskreten Punkten der Linsenoberflächen interpoliert werden, so dass man näherungsweise die Form bzw. den Oberflächenverlauf der Lichteintritts- und/oder Lichtaustrittsflächen einer Projektionslinse erhält, die zur Erzeugung der gewünschten Lichtverteilung geeignet ist.

Die Berechnung der Form Projektionslinse bzw. des Verlaufs der Linsenoberflächen kann für die gewünschte Lichtverteilung in vertikaler Richtung und für die gewünschte Lichtverteilung in horizontaler Richtung getrennt voneinander, insbesondere nacheinander erfolgen. Der Oberflächenverlauf der Projektionslinse kann in den diskreten Punkten so lange variiert werden, bis die gewünschte Lichtverteilung möglichst gut erzielt wird. Das Computerprogramm führt dabei ein iteratives Verfahren aus, das abgebrochen wird, wenn die tatsächlich realisierte Lichtverteilung in einer bestimmten Anzahl von diskreten Punkten möglichst dicht an der gewünschten Lichtverteilung liegt. Wenn das Abbruchkriterium erfüllt ist, wird das mit dem Computerprogramm realisierte Verfahren beendet. Die berechneten Daten für die Form und/oder den Oberflächenverlauf der zur Erzeugung einer gewünschten Lichtverteilung geeigneten Projektionslinse können direkt zur Herstellung der Linse herangezogen werden, bspw. indem sie einem Fräswerkzeug zugeführt werden, um aus einem Glasblock die gewünschte Projektionsoptik zu fräsen.

Gemäß einer vorteilhaften Weiterbildung des erfindungsgemäßen Verfahrens wird vorgeschlagen, dass die Güte der Lichtverteilung mittels eines Optimierungsprogramms ermittelt wird. Das Optimierungsprogramm nutzt vorteilhafterweise eine Zielfunktion zur Beschreibung der resultierenden Lichtverteilung, die durch die Linse mit den deformierten Oberflächen erzielt wird, wobei versucht wird, die Zielfunktion durch die Deformationen der Oberflächen zu minimieren. Als Zielfunktion wird vorzugsweise eine Fehlerquadratsumme eingesetzt. Zur Minimierung der Fehlerquadratsumme wird bevorzugt die Methode der kleinsten Quadrate verwendet.

Um im Rahmen des automatisiert ausgeführten Verfahrens die Güte der resultierenden Lichtverteilung ermitteln zu können, sind verschiedene Ansätze denkbar. Als ein möglicher Ansatz wird vorgeschlagen, dass Intensitätswerte der vorgegebenen Lichtverteilung und der resultierenden Lichtverteilung, die durch die Linse mit den deformierten Oberflächen erzielt wird, in einem identischen Pixelraster für ausgewählte Pixel miteinander verglichen und die Fehlerquadratsummen jeweils aus dem Quadrat der Differenz der Intensitätswerte in einem bestimmten Pixel berechnet werden. Für ausgewählte Pixel des Pixelrasters werden also die Intensitätswerte jeweils für die resultierende Lichtverteilung und für die vorgegebene Lichtverteilung ermittelt. Es wird die Differenz der Intensitätswerte in diesen Pixeln berechnet und das Quadrat der Differenz gebildet. Anhand der Summe der für die ausgewählten Pixel berechneten Quadrate kann die Güte der resultierenden Lichtverteilung automatisch ermittelt werden. Dabei ist es denkbar, die Quadrate für verschiedene Pixel unterschiedlich zu gewichten.

Weitere Merkmale und Vorteile der vorliegenden Erfindung werden nachfolgend anhand der Figuren, die bevorzugte Ausführungsbeispiele der Erfindung zeigen, näher erläutert. Es zeigen:
- Figur 1: einen Vertikalschnitt durch eine aus dem Stand der Technik bekannte Projektionslinse zur Erzeugung von abgesenkten Lichtquellenabbildern für eine Vorfeldausleuchtung und/oder Seitenausleuchtung einer Lichtverteilung;
- Figur 2: eine mit der Linse aus Figur 1 erzielte Lichtverteilung;
- Figur 3: einen Vertikalschnitt durch eine nach einem erfindungsgemäßen Verfahren berechneten Projektionslinse gemäß einem ersten Ausführungsbeispiel zur Erzeugung von kleinen Lichtquellenabbildern für ein Maximum und eine Helldunkelgrenze einer abgeblendeten Lichtverteilung;
- Figur 4: einen Vertikalschnitt durch eine nach einem erfindungsgemäßen Verfahren berechneten Projektionslinse gemäß einem zweiten Ausführungsbeispiel zur Erzeugung von großen Lichtquellenabbildern für eine Vorfeldausleuchtung und/oder Seitenausleuchtung einer Lichtverteilung;
- Figur 5: einen Vertikalschnitt durch eine nach einem erfindungsgemäßen Verfahren berechneten Projektionslinse gemäß einem dritten Ausführungsbeispiel zur Erzeugung von unterschiedlich großen Lichtquellenabbildern;
- Figur 6: mit der Linse aus Figur 5 beispielhaft erzeugte Lichtquellenabbilder;
- Figur 7: eine mit der Linse aus Figur 5 durch Überlagerung der Lichtquellenabbilder gemäß Figur 6 erzielte Lichtverteilung;
- Figur 8: einen Zusammenhang zwischen einer Vorgabe einer Lichtverteilung in vertikaler Richtung und einem entsprechenden Vertikalschnitt durch eine zur Erfüllung dieser Vorgabe ausgestalteten nach einem erfindungsgemäßen Verfahren berechneten Projektionslinse;
- Figur 9: einen Vertikalschnitt durch eine nach einem erfindungsgemäßen Verfahren berechneten Projektionslinse gemäß einem vierten Ausführungsbeispiel;
- Figur 10: eine mit der Linse aus Figur 9 erzielte Lichtverteilung;
- Figur 11: einen Vertikalschnitt durch eine nach einem erfindungsgemäßen Verfahren berechneten Projektionslinse gemäß einem fünften Ausführungsbeispiel, welche eine Verzerrung einer Lichtquelle nur in vertikaler Richtung bewirkt;
- Figur 12: mit der Linse aus Figur 11 beispielhaft erzeugte, nur in vertikaler Richtung verzerrte Lichtquellenabbilder;
- Figur 13: eine mit der Linse aus Figur 11 durch Überlagerung der Lichtquellenabbilder gemäß Figur 12 erzielte Lichtverteilung;
- Figur 14: einen Horizontalschnitt durch eine nach einem erfindungsgemäßen Verfahren berechneten Projektionslinse gemäß einem sechsten Ausführungsbeispiel, welche eine Verzerrung einer Lichtquelle nur in horizontaler Richtung bewirkt;
- Figur 15: mit der Linse aus Figur 14 beispielhaft erzeugte, nur in horizontaler Richtung verzerrte Lichtquellenabbilder;
- Figur 16: eine mit der Linse aus Figur 14 durch Überlagerung der Lichtquellenabbilder gemäß Figur 15 erzielte Lichtverteilung;
- Figur 17: eine perspektivische Ansicht einer nach einem erfindungsgemäßen Verfahren berechneten Projektionslinse gemäß einem siebten Ausführungsbeispiel, welche eine Verzerrung einer Lichtquelle sowohl in vertikaler als auch in horizontaler Richtung bewirkt;
- Figur 18: mit der Linse aus Figur 17 beispielhaft erzeugte, sowohl in vertikaler als auch in horizontaler Richtung verzerrte Lichtquellenabbilder;
- Figur 19: eine mit der Linse aus Figur 17 durch Überlagerung der Lichtquellenabbilder gemäß Figur 18 erzielte Lichtverteilung;
- Figur 20: eine Lichtverteilung, die ausgehend von der Lichtverteilung gemäß Figur 13 durch Absenken der Lichtquelle relativ zu der Projektionslinse gemäß Figur 11 erzielt wurde;
- Figur 21: einen Vertikalschnitt durch eine bekannte Projektionslinse;
- Figur 22: mit der bekannten Linse aus Figur 21 erzeugte herkömmliche Lichtquellenabbilder;
- Figur 23: eine mit der bekannten Linse aus Figur 21 durch Überlagerung der Lichtquellenabbilder gemäß Figur 22 erzielte herkömmliche Lichtverteilung;
- Figur 24: eine perspektivische Ansicht einer bekannten Projektionslinse;
- Figur 25: mit der bekannten Linse aus Figur 24 erzeugte herkömmliche Lichtquellenabbilder;
- Figur 26: eine mit der bekannten Linse aus Figur 24 durch Überlagerung der Lichtquellenabbilder gemäß Figur 25 erzielte herkömmliche Lichtverteilung;
- Figur 27: einen Kraftfahrzeugscheinwerfer gemäß einer bevorzugten Ausführungsform mit einer nach einem erfindungsgemäßen Verfahren berechneten Projektionslinse;
- Figur 28: eine mit einer aus dem Stand der Technik bekannten Linse gemäß Figur 21 erzielbare Lichtverteilung;
- Figur 29: eine mit einer aus dem Stand der Technik bekannten Linse gemäß Figur 1 erzielbare Lichtverteilung;
- Figur 30: eine mit einer nach einem erfindungsgemäßen Verfahren berechneten Linse erzielbare Lichtverteilung;
- Figur 31: eine Intensität im Fernfeld einer mit einer aus dem Stand der Technik bekannten Linse gemäß Figur 21 erzielbaren Lichtverteilung;
- Figur 32: eine Intensität im Fernfeld einer mit einer aus dem Stand der Technik bekannten Linse gemäß Figur 1 erzielbaren Lichtverteilung;
- Figur 33: eine Intensität im Fernfeld einer mit einer nach einem erfindungsgemäßen Verfahren berechneten Linse erzielbaren Lichtverteilung;
- Figur 34: eine Intensität im Vorfeld einer mit einer aus dem Stand der Technik bekannten Linse gemäß Figur 21 erzielbaren Lichtverteilung;
- Figur 35: eine Intensität im Vorfeld einer mit einer aus dem Stand der Technik bekannten Linse gemäß Figur 1 erzielbaren Lichtverteilung; und
- Figur 36: eine Intensität im Vorfeld einer mit einer nach einem erfindungsgemäßen Verfahren berechneten Linse erzielbaren Lichtverteilung.

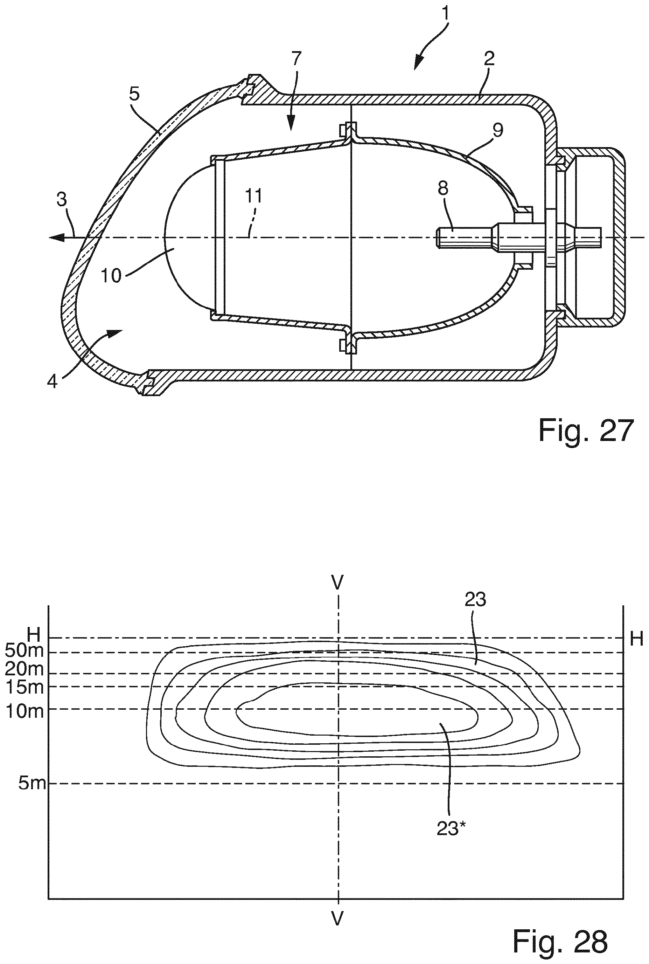

In Figur 27 ist ein Kraftfahrzeugscheinwerfer gemäß einer bevorzugten Ausführungsform gezeigt. Der Scheinwerfer ist in seiner Gesamtheit mit dem Bezugszeichen 1 bezeichnet. Der Scheinwerfer 1 umfasst ein Gehäuse 2, das vorzugsweise aus Kunststoff gefertigt ist. In einem vorderen Abschnitt, das heißt in Lichtaustrittsrichtung 3 gesehen, weist das Gehäuse 2 eine Lichtaustrittöffnung 4 auf, die durch eine transparente Abdeckscheibe 5 verschlossen ist. Die Abdeckscheibe 5 kann optisch wirksame Elemente (z.B. Prismen oder Zylinderlinsen) zum Streuen der hindurchtretenden Lichtstrahlen vorzugsweise in horizontaler Richtung, denkbar aber auch in vertikaler Richtung, aufweisen (sogenannte Streuscheibe). Vorzugsweise ist die Abdeckscheibe 5 jedoch ohne optisch wirksame Elemente ausgebildet (sogenannte klare Scheibe). Die Abdeckscheibe 5 ist aus einem transparenten Glas- oder Kunststoffmaterial gefertigt.

Im Inneren des Scheinwerfergehäuses 2 ist ein Lichtmodul angeordnet, das in seiner Gesamtheit mit dem Bezugszeichen 7 bezeichnet ist. Das Lichtmodul 7 umfasst eine Lichtquelle 8, die als eine Glühlampe, als eine Gasentladungslampe oder als eine oder mehrere Leuchtdioden (LEDs) ausgebildet sein kann. Die von der Lichtquelle 8 ausgesandten Lichtstrahlen werden mittels einer Primäroptik 9 gebündelt und in etwa in Lichtaustrittsrichtung 3 gelenkt. In dem dargestellten Ausführungsbeispiel ist die Primäroptik 9 als ein Reflektor ausgebildet. Es ist jedoch denkbar, dass die Primäroptik 9 als eine TIR (Total Internal Reflection)- Vorsatzoptik ausgebildet ist. Eine solche Vorsatzoptik besteht aus einem transparenten Glas- oder Kunststoffmaterial. Das von Lichtquelle 8 ausgesandte Licht wird in die Vorsatzoptik eingekoppelt, an äußeren Grenzflächen der Vorsatzoptik totalreflektiert und tritt dann wieder aus der Vorsatzoptik aus. Die Bündelung der Lichtstrahlen erfolgt bei einer TIR-Vorsatzoptik durch eine Brechung beim Eintritt in die Vorsatzoptik oder beim Austritt aus der Vorsatzoptik und/oder durch die Totalreflexion an den Grenzflächen.

Im Strahlengang der gebündelten Lichtstrahlen ist ferner eine Projektionsoptik 10 angeordnet, welche das durch sie hindurchtretende Licht zur Erzeugung einer gewünschten Lichtverteilung auf eine Fahrbahn vor einem mit dem Scheinwerfer 1 ausgestatteten Kraftfahrzeug projiziert. Die Projektionsoptik 10 ist als eine nach einem erfindungsgemäßen Verfahren berechnete Projektionslinse ausgebildet und wird nachfolgend noch näher erläutert. Das Lichtmodul 7 wird auch als Projektionsmodul bezeichnet. Es ist fest oder um eine horizontale und/oder vertikale Achse drehbar in dem Gehäuse 2 angeordnet. Eine optische Achse des Projektionsmoduls 7 ist mit dem Bezugszeichen 11 bezeichnet.

In Projektionsmodulen 7 werden Linsen 10 eingesetzt, die entweder eine Lichtverteilung, die beispielsweise durch den Reflektor 9 erzeugt wird, in einer Zwischenebene in die Ferne abbilden, oder sogenannten direktabbildende Systeme, bei denen die Lichtquelle 8 (typischerweise eine LED) über die Linse 10 abgebildet wird, ohne dass eine weitere optisch aktive Fläche zur Bündelung der Lichtstrahlen erforderlich wäre.

Solche direktabbildenden Projektionssysteme erzeugen durch geeignete Form der Linse 10 Lichtverteilungen, die sowohl in horizontaler als auch in vertikaler Richtung eine definierte Ausdehnung aufweisen. Die Projektionslinse 10 ist derart ausgebildet, dass sie - im Zusammenwirken mit der Primäroptik 9 - eine Helldunkelgrenze einer abgeblendeten Lichtverteilung ohne zusätzliche, im Strahlengang angeordnete Blendenanordnung erzeugen kann. Die Helldunkelgrenze kann dabei streng horizontal symmetrisch verlaufen, oder aber einen asymmetrischen Verlauf aufweisen, bspw. gemäß ECE- oder SAE-Regelungen. Bekannte Projektionslinsen sind so geformt, dass eine Seite der Linse entweder plan, konvex oder konkav geformt ist.

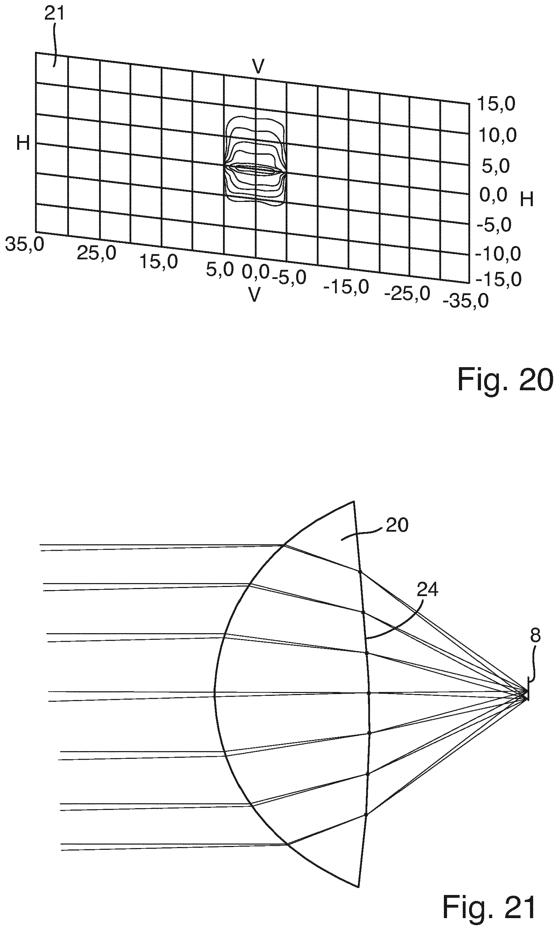

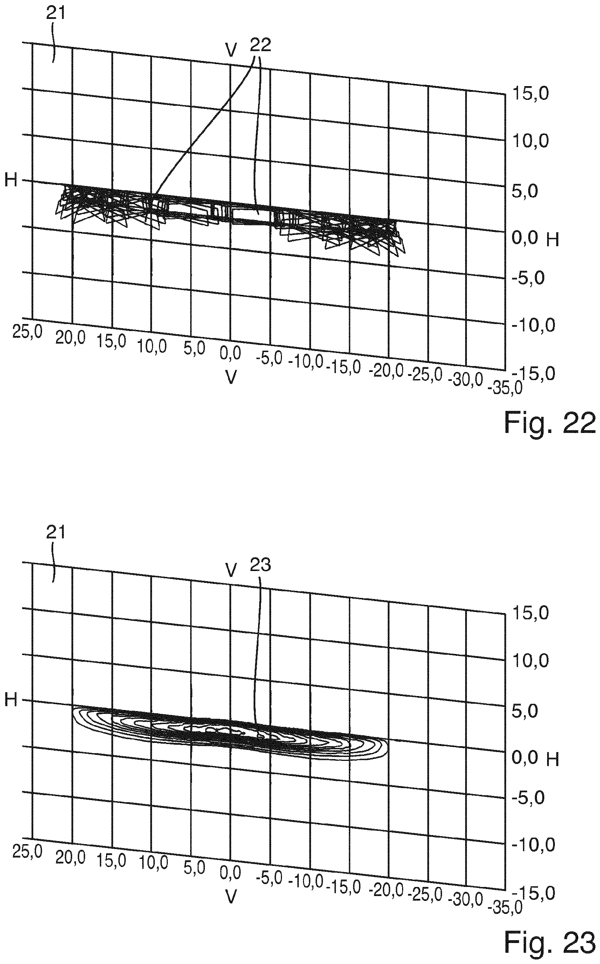

Figur 21 zeigt einen Vertikalschnitt durch eine aus dem Stand der Technik bekannte herkömmliche Projektionslinse 20 mit dem entsprechenden Strahlengang für beispielhaft ausgewählte Lichtstrahlen. Hierbei ist deutlich zu erkennen, dass die vertikale Ausdehnung beziehungsweise Divergenz der Lichtstrahlen, welche die Linse 20 verlassen, unabhängig vom Austrittsort aus der Linse 20 annähernd gleichgroß ist. Die sich daraus ergebenden Lichtquellenabbilder auf einem in einem Abstand zu einem mit der herkömmlichen Projektionslinse 20 ausgestatteten Scheinwerfer 1 angeordneten Messschirm 21 sind in Figur 22 beispielhaft dargestellt. Auf dem Messschirm 21 sind zwei orthogonale Achse eingezeichnet, eine Horizontalachse HH und eine Vertikalachse VV. Die Achsen HH, VV schneiden sich in einem Punkt HV. Die optische Achse 11 des Moduls 7 verläuft vorzugsweise durch den Schnittpunkt HV. Es ist deutlich zu erkennen, dass sich die Lichtquellenabbilder 22, die mit der herkömmlichen Projektionslinse 20 erzeugt werden können, von ihrer Form her geringfügig voneinander unterscheiden, aber in ihrer Größe nahezu gleichgroß sind. Die sich auf einem Messschirm 21 daraus durch eine Überlagerung der Lichtquellenabbilder 22 ergebende Lichtverteilung 23 ist in Figur 23 dargestellt.

Untersucht man die Strahlengänge einer solchen bekannten Linse 20 stellt man fest, dass die Abbilder 22 der Lichtquelle 8 alle eine ähnliche Größe auf dem Messschirm 21 aufweisen. Dies hat zur Folge, dass die bekannten Projektionsmodule beim Erzeugen einer gewünschten Lichtverteilung nicht die Möglichkeit haben, besonders kleine Abbilder 22 für die Reichweite oder verhältnismäßig große Abbilder zur Vorfeld- und Seitenausleuchtung zu erzeugen.

Da die bekannte Projektionslinse 20 keine kleinen Lichtquellenabbilder 22 erzeugen kann, ist eine Vorfeldausleuchtung nur über ein Absenken der Lichtquellenabbilder 22 möglich. Das bedeutet, dass Abbilder 22 von der Helldunkelgrenze ins Vorfeld nach unten verschoben werden. Dies führt zwangsläufig dazu, dass die Reichweite verringert und der Gradient an der Helldunkelgrenze geschwächt wird.

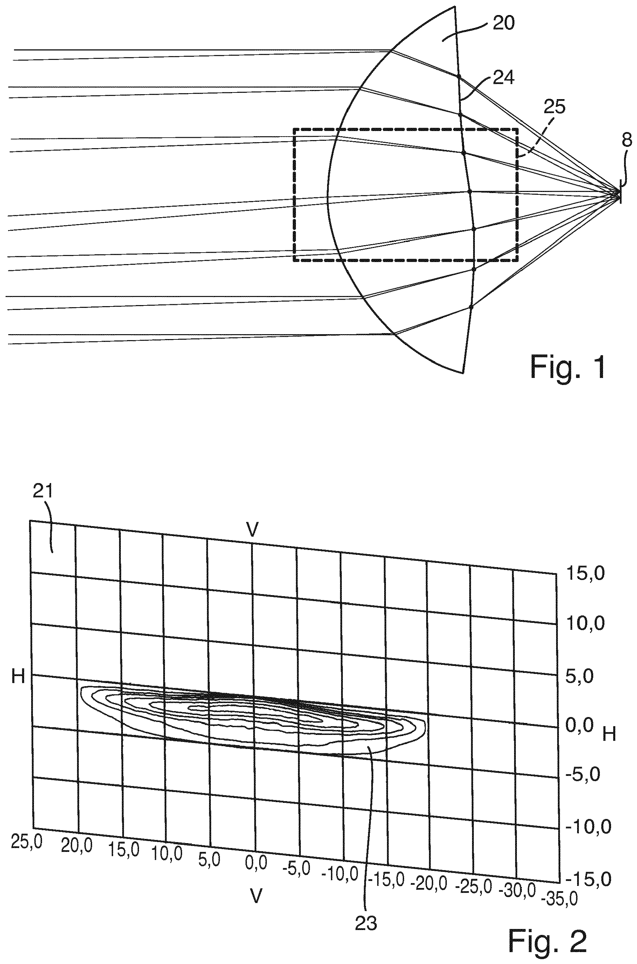

In Figur 1 ist eine aus dem Stand der Technik bekannte Projektionslinse 20 dargestellt, deren Lichteintrittsfläche 24 gegenüber der herkömmlichen Projektionslinse 20 aus Figur 21 in einem Bereich 25 geringfügig verändert wurde, um den bekannten Effekt eines Absenkens der Lichtquellenabbilder 22 zum Ausleuchten des Vorfelds zu erzielen. Die abgesenkten Lichtstrahlen sind durch einen Pfeil kenntlich gemacht. Die Lichtverteilung 23 einer derart ausgelegten Projektionslinse 20 ist in Figur 2 gezeigt. Es ist deutlich zu erkennen, dass der Gradient an der Helldunkelgrenze geschwächt ist (die Isolux-Linien an der Oberseite der Lichtverteilung liegen nicht sehr dicht beieinander) und es der Lichtverteilung 23 an Reichweite fehlt.

Die vorliegende Erfindung dient insbesondere dazu, abbildende Systeme, wie beispielsweise das Projektionsmodul 7, mit verschiedenen Abbildungsmaßstäben zu erzeugen. Statt einer aus dem Stand der Technik bekannten abbildenden Linse 20 wird eine nach einem erfindungsgemäßen Verfahren berechnete Projektionslinse 10 verwendet, die nur einen kleinen Bereich scharf abbildet und in anderen Bereichen aufgrund sich ändernder Abbildungsmaßstäbe nur unscharf abbildet. Dies führt dazu, dass zur Erzeugung einer gewünschten, vorgegebenen Lichtverteilung verschieden große Lichtquellenabbilder zur Verfügung stehen. Zur Erzeugung eines Maximums und eines lokalen Gradienten im Bereich der Helldunkelgrenze der Lichtverteilung werden überwiegend kleine Lichtquellenabbilder verwendet. Diese können Licht sehr genau lokal konzentrieren. Zur Erzeugung von gleichförmig ausgeleuchteten Bereichen der Lichtverteilung, insbesondere im Vorfeldbereich oder im Seitenauslauf einer Lichtverteilung, werden dagegen verhältnismäßig große Lichtquellenabbilder verwendet. Mit Hilfe der vorliegenden Erfindung ist es nun möglich, Projektionssysteme so auszulegen, dass kleine und große Lichtquellenabbilder mit einer einzigen Projektionslinse 10 erzeugt werden können.

Die vorliegende Erfindung beruht insbesondere auf der Überlegung, dass es Kombinationen von Lichteintrittsflächen und Lichtaustrittflächen eines lichtbrechenden Körpers gibt, die dazu führen, dass die Lichtquellenabbilder 22 verschieden groß auf dem Messschirm 21 erscheinen.

Bei der herkömmlichen Ausgestaltung einer Projektionslinse 20 wie sie in Figur 21 dargestellt ist, propagieren die Lichtstrahlen nach dem Linsenaustritt mit annähernd gleich großer Divergenz.

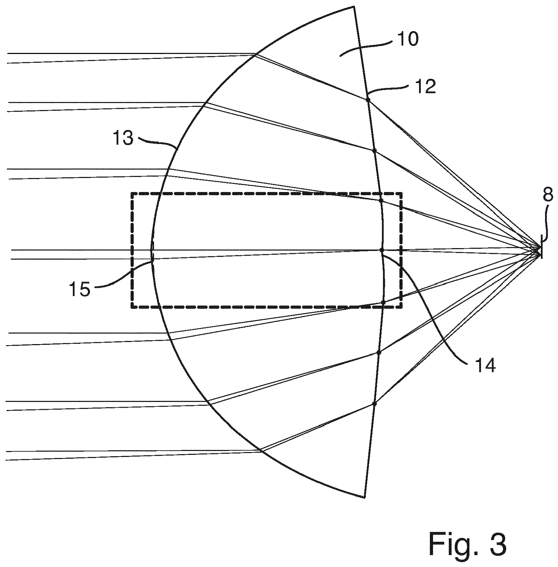

In Figur 3 ist eine nach einem erfindungsgemäßen Verfahren berechnete Projektionslinse 10 gemäß einer bevorzugten Ausführungsform dargestellt. Die dargestellte Projektionslinse 10 zeichnet sich insbesondere dadurch aus, dass sie in der Mitte, das heißt im Bereich der optischen Achse 11 des Projektionsmoduls 7, eine in besonderer Weise ausgestaltete Lichteintrittsfläche 12 und eine entsprechend ausgestaltete Lichtaustrittfläche 13 aufweist. Insbesondere ist die Projektionslinse 10 in der Mitte derart ausgestaltet, dass die Lichtstrahlen im Bereich der optischen Achse 11 die Linse 10 annähernd parallel verlassen. Dies führt zu vergleichsweise kleinen Lichtquellenabbildern, die besonders gut geeignet sind, um Lichtkonzentrationen für Maximum und Helldunkelgrenze der Lichtverteilung zu erzeugen. Dies wird in dem dargestellten Ausführungsbeispiel dadurch erreicht, dass in der Mitte der Lichteintrittsfläche 12 eine lokale Vertiefung 14 und in der Mitte der Lichtaustrittsfläche 13 eine lokale Aufdickung 15 ausgebildet ist.

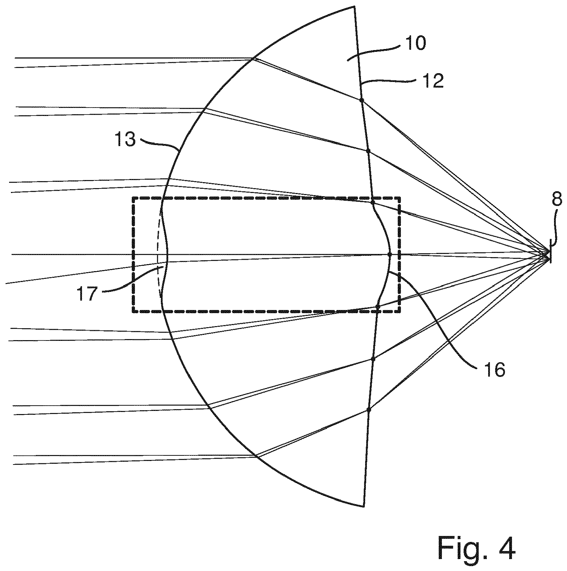

In Figur 4 ist ein anderes Ausführungsbeispiel einer nach einem erfindungsgemäßen Verfahren berechneten Projektionslinse 10 dargestellt. Dabei sind die Lichteintrittsfläche 12 und die Lichtaustrittsfläche 13 in einem mittleren Bereich der Linse 10, das heißt im Bereich der optischen Achse 11, derart ausgestaltet, dass die Lichtstrahlen in der Mitte stark divergierend die Linse 10 verlasen. Dies führt zu vergleichsweis großen Lichtquellenabbildern, die besonders gut geeignet sind um homogen, großflächig ausgeleuchtete Bereiche der Lichtverteilung für eine Vorfeld- und/oder Seitenausleuchtung zu erzeugen. In dem dargestellten Ausführungsbeispiel wird dies beispielsweise durch eine lokale Aufdickung 16 der Lichteintrittsfläche 12 und eine entsprechende lokale Vertiefung 17 der Lichtaustrittsfläche 13 in der Mitte der Projektionslinse 10 erreicht.

Trotz der unterschiedlichen Ausgestaltungen der Linsen 10, 20 gemäß der Figuren 21, 3 und 4 erzeugen alle drei Linsen eine scharfe horizontale Helldunkelgrenze. Jedes der Strahlenbündel kann so gerichtet werden, dass der höchste Punkt eines Lichtquellenabbildes auf oder sehr dicht an der Helldunkelgrenze liegt. Die Projektionslinse 10 des Lichtmoduls 7 hat jedoch den Vorteil, dass mit ihr Lichtquellenabbilder 31 unterschiedlicher Größe erzeugt werden können, die zur Optimierung der Lichtverteilung in die gewünschten Bereiche der Lichtverteilung gelenkt werden können (kleine Abbilder dicht an die Helldunkelgrenze, große Abbilder in das Vorfeld oder Seitenbereiche der Lichtverteilung).

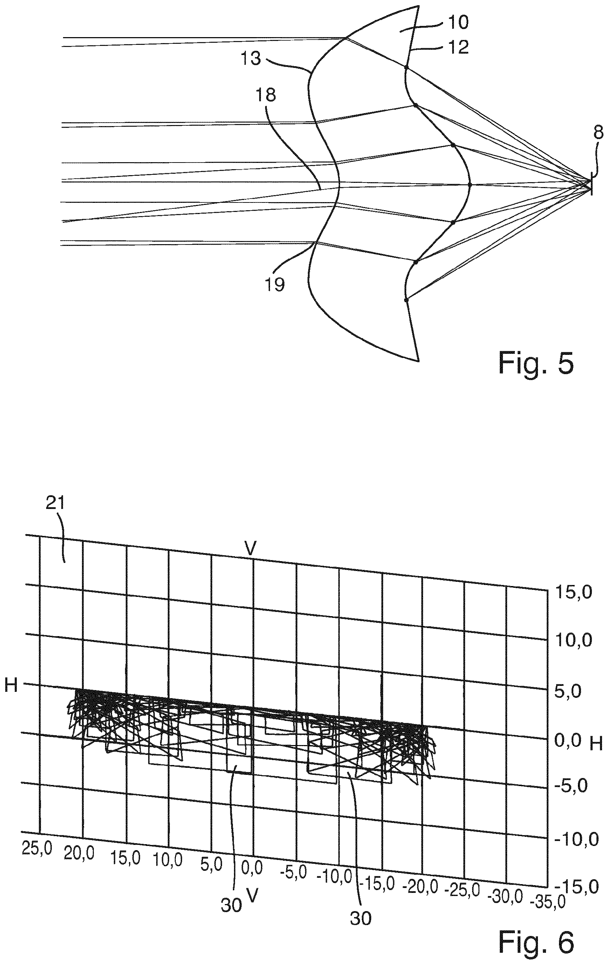

In Figur 5 ist eine weitere bevorzugte Ausführungsform einer nach einem erfindungsgemäßen Verfahren berechneten Projektionslinse 10 dargestellt, wobei die Variationen der Lichteintrittsfläche 12 und der Lichtaustrittsfläche 13 nicht maßstabsgerecht dargestellt sind, um das Prinzip der Erfindung deutlicher zu machen. In Figur 5 ist eine Projektionslinse 10 dargestellt, die eine Kombination aus stark divergierenden und annähernd parallelen Strahlen erzeugt. Dabei werden die stark divergierenden Lichtstrahlen zur Erzeugung großer Lichtquellenabbilder im Vorfeld oder an den Seiten einer Lichtverteilung verwendet. Die annähernd parallelen Lichtstrahlen werden dagegen zur Erzeugung relativ kleiner Lichtquellenabbilder im Bereich der Helldunkelgrenze verwendet.

Die in Vergleich zu einer herkömmlichen Projektionslinse 20 relativ stark divergierenden Lichtstrahlen etwa in der Mitte der Projektionslinse 10 sind in Figur 5 mit dem Bezugszeichen 18 bezeichnet. In einem Abstand von der Mitte der Linse 10 sind im Vergleich zu einer herkömmlichen Projektionslinse 20 relativ stark konzentrierte Lichtstrahlen mit den Bezugszeichen 19 bezeichnet. Am äußeren Rand der Projektionslinse 10 sind Lichtstrahlen eingezeichnet, deren Divergenz in etwa der einer herkömmlichen Projektionslinse 20 entspricht. Wie anhand der Figur 5 deutlich zu erkennen ist, weisen die Strahlenbündel für jedes Lichtquellenabbild unterschiedliche Divergenzen auf. Die Lichteintrittsfläche 12 und die Lichtaustrittsfläche 13 sorgen auch in diesem Fall dafür, dass jedes Lichtquellenabbild bzw. der höchste Punkt eines jeden Lichtquellenabbilds direkt an der Helldunkelgrenze liegt.

In Figur 6 sind beispielhaft mit der Linse 10 aus Figur 5 erzeugte Lichtquellenabbilder 30 auf einem Messschirm 21 dargestellt. Es ist gut zu erkennen, dass die Lichtquellenabbilder 30 nicht nur unterschiedliche Formen, sondern auch deutlich voneinander abweichende Größen aufweisen.

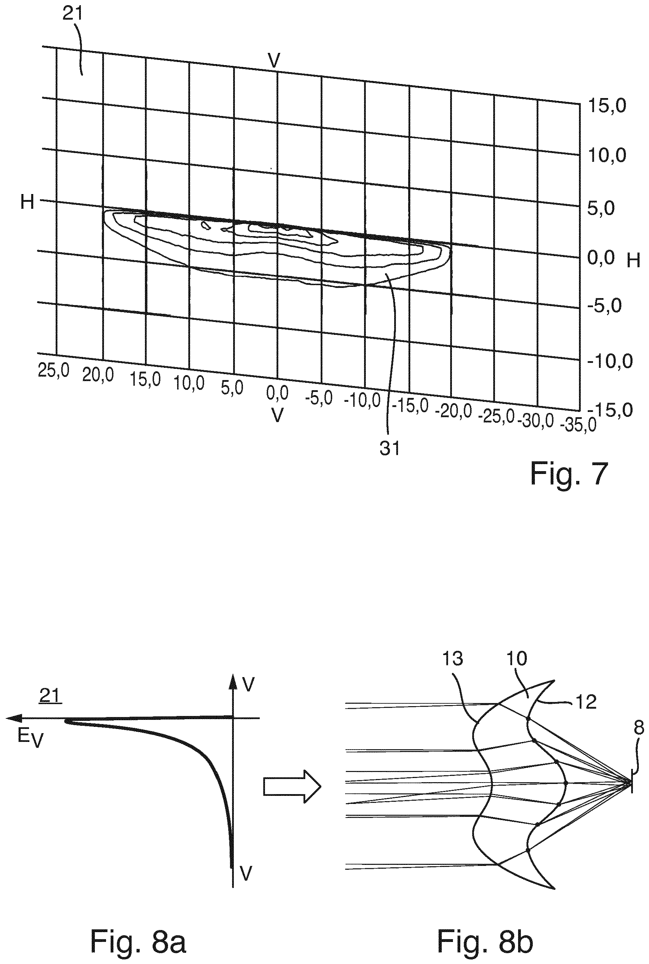

Die entsprechende Lichtverteilung 31, die durch Überlagerung der Lichtquellenabbilder 30 aus Figur 6 der Projektionslinse 10 aus Figur 5 erzeugt werden kann, ist in Figur 7 dargestellt. Dadurch, dass alle Lichtquellenabbilder 30, bzw. deren höchste Punkte, direkt unterhalb der Helldunkelgrenze liegen und sich durch ihre Ausdehnung in vertikaler Richtung unterscheiden, wird zum Einen eine scharfe Helldunkelgrenze erzeugt und zum Anderen eine gute Vorfeldausleuchtung erzielt. Der Lichtschwerpunkt bleibt dabei jedoch wie gewünscht nahe der Helldunkelgrenze. Dies bewirkt eine deutlich bessere Reichweite der Lichtverteilung 31 bei gleichzeitig deutlich verbesserter Vorfeldausleuchtung.

Mit der vorliegenden Erfindung und unter Zugrundelegung der beschriebenen Überlegungen ist es möglich, eine Projektionslinse 10 zur Erzeugung einer vorgegebenen Lichtverteilung 31 zu erzeugen. Das heißt, ein vertikaler Verlauf der Lichtverteilung 31 auf dem Messschirm 21 wird vorgegeben, und es wird die entsprechende Projektionslinse 10 erzeugt, die eine Lichtquelle 8 entsprechend abbildet, sodass die gewünschte Lichtverteilung aus unterschiedlich großen Lichtquellenabbildern 30 erzeugt werden kann. Die gewünschte Beleuchtungsstärke E ist in Abhängigkeit von einer vertikalen Position auf dem Messschirm 21 in Figur 8a) dargestellt. Eine Möglichkeit für eine sich daraus ergebende, zur Erzeugung der vorgegebenen Lichtverteilung geeignete Projektionslinse 10 ist, in Figur 8b) beispielhaft dargestellt. Auch hier ist die Form der Lichteintrittsfläche 12 und der Lichtaustrittsfläche 13 im Bereich der lokalen Aufdickung und der lokalen Vertiefung nicht maßstabsgerecht dargestellt, sondern vielmehr zur Veranschaulichung vergrößert wiedergegeben.

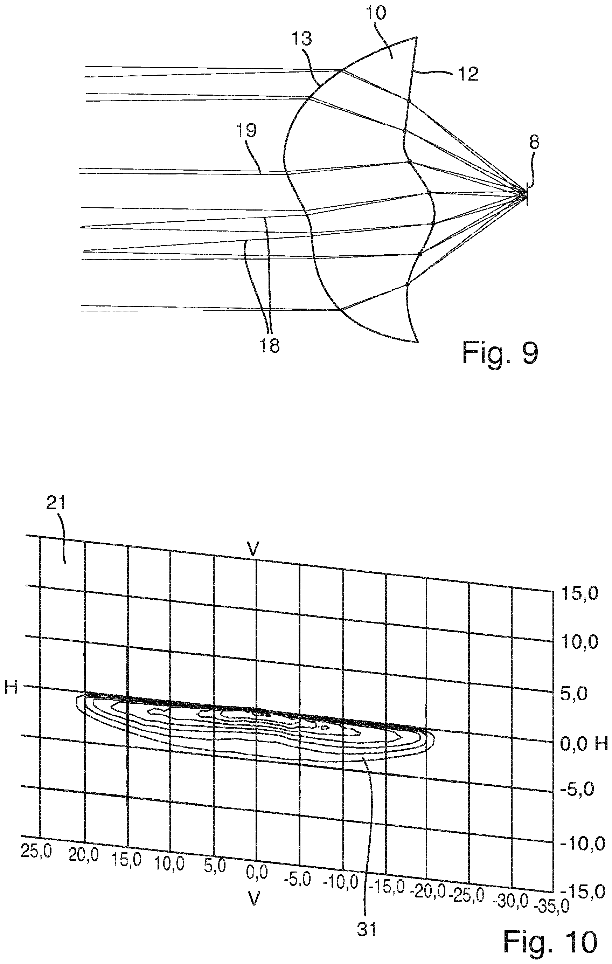

Zur Erzeugung einer gewünschten Lichtverteilung gibt es viele verschiedene Möglichkeiten, die Lichteintrittsfläche 12 und die Lichtaustrittsfläche 13 der Projektionsoptik 10 auszugestalten. In Figur 9 ist ein weiteres Ausführungsbeispiel einer nach einem erfindungsgemäßen Verfahren berechneten, in diesem Fall asymmetrisch zur optischen Achse ausgebildete Projektionsoptik 10 dargestellt, wobei die Lichtstrahlen, die nach dem Durchtritt durch die Linse 10 eine stärkere Konzentration aufweisen als bei einer herkömmlichen Projektionslinse 20 etwa in der Mitte der Projektionslinse 10 mit dem Bezugszeichen 19 bezeichnet sind. Dementsprechend sind diejenigen Lichtstrahlen, die nach dem Durchtritt durch die Linse 10 eine im Vergleich zu einer herkömmlichen Projektionslinse 20 stärkere Divergenz aufweisen, mit dem Bezugszeichen 18 bezeichnet. Die divergierenden Lichtstrahlen 18 sind in einem Abstand zur Mitte der Linse 10 beziehungsweise zu den stärker konzentrierten Lichtstrahlen 19 angeordnet.

Eine mit der Linse 10 aus Figur 9 erzielte Lichtverteilung 31 auf einem Messschirm 21 ist in Figur 10 dargestellt. Das besondere an allen dargestellten und beschriebenen Ausführungsformen einer nach einem erfindungsgemäßen Verfahren berechneten Projektionslinse 10 ist es, dass lokal in den verschiedenen Teilbereichen der Lichtverteilung 31 Lichtquellenabbilder 30 erzeugt werden können, deren vertikale Ausdehnungen deutlich unterschiedlich sind und deren höchste Punkte nahe der Helldunkelgrenze liegen.

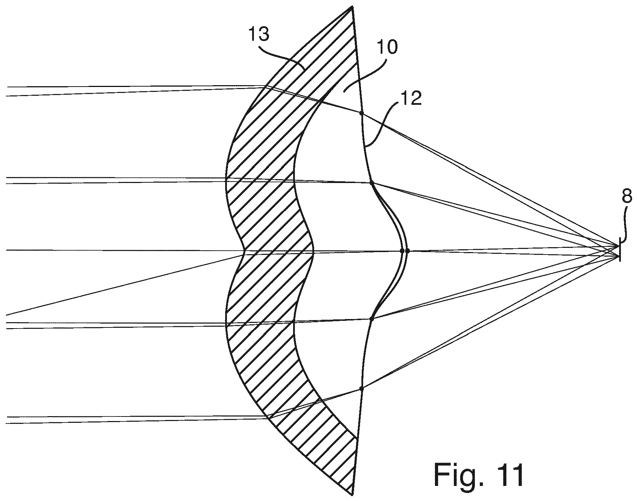

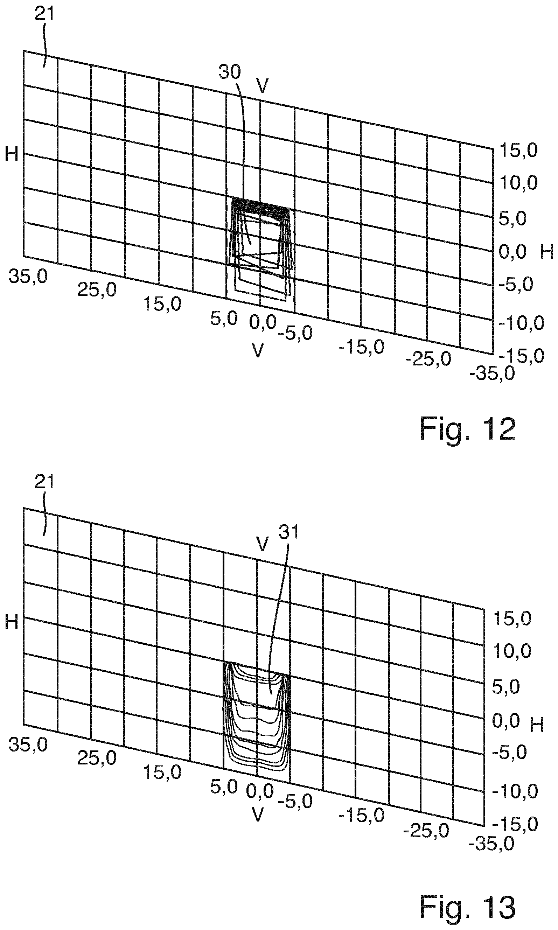

Bisher wurden lediglich Projektionslinsen 10 dargestellt und beschrieben, die eine Lichtaustrittsfläche 13 aufweisen, die in vertikaler Richtung gekrümmt erscheint und in der horizontalen Richtung annähernd eben ist. Selbstverständlich wäre es auch möglich, solche Fläche 12, 13 derart auszugestalten, dass sowohl in vertikaler als auch in horizontaler Richtung der Lichtaustrittsfläche 13 Krümmungen auftreten. Ein Beispiel für eine solche Projektionslinse 10 ist in Figur 11 gezeigt. In diesem Fall sind unterschiedliche, lokale, über die gesamte Linse 10 verteilte Linsenabschnitte angeordnet, die jeweils unterschiedliche Abbildungsmaßstäbe aufweisen. Die in Figur 11 gezeigte Gesamtlinse 10 verzerrt die Lichtquelle 8 lediglich in vertikaler Richtung. Die mit der Linse 10 aus Figur 11 erzeugten, nur in vertikaler Richtung verzerrten Lichtquellenabbilder 30 sind auf einem Messschirm 21 in Figur 12 dargestellt. Die entsprechende resultierende Lichtverteilung 31 auf dem Messschirm 21, die sich aus einer Überlagerung der Abbilder 30 aus Figur 12 ergibt, ist in Figur 13 gezeigt.

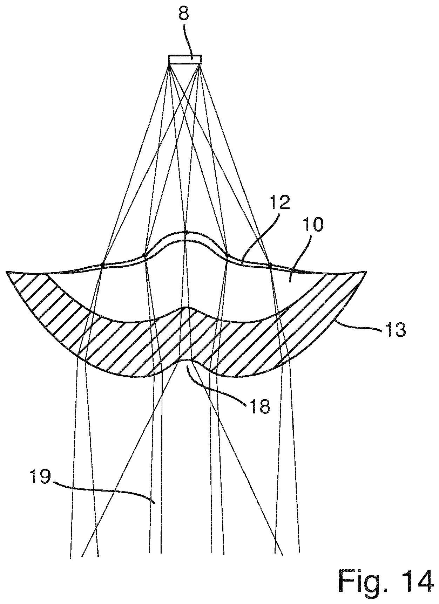

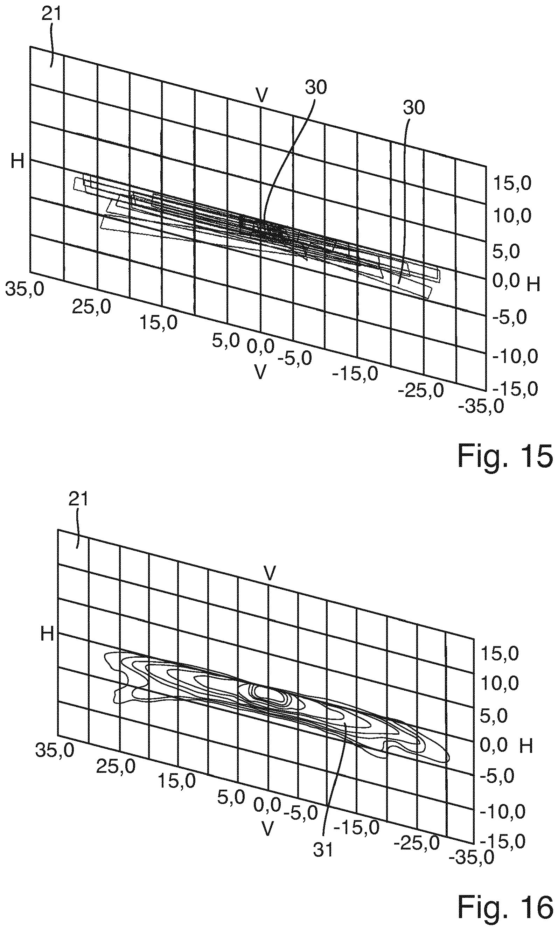

In Figur 14 ist eine abbildende Projektionslinse 10 in einem Horizontalschnitt dargestellt, die eine Lichtquelle 8 nur in horizontaler Richtung verzerrt. Auch hier sind die stark divergierenden Lichtstrahlen mit dem Bezugszeichen 18 bezeichnet und die konzentrierten Lichtstrahlen mit dem Bezugszeichen 19. Die mit der Linse 10 aus Figur 14 erzeugten, nur in horizontaler Richtung verzerrten Lichtquellenabbilder 30 auf einem Messschirm 21 sind beispielhaft in Figur 15 gezeigt. Die entsprechende resultierende Lichtverteilung 31 auf einem Messschirm 21 ist in Figur 16 gezeigt. Somit erzeugt die Projektionslinse 10 aus Figur 14 neben einer Helldunkelgrenze mit hohem Gradienten auch noch eine horizontale Ausdehnung der Lichtverteilung 31 (Seitenstreuung). Wie bei der vertikalen Ausdehnung der Lichtverteilung 31 über verschieden große Lichtquellenabbilder 30 (vergleiche Figur 12), liegen auch bei der horizontalen Verzerrung in Figur 15 alle Lichtquellenabbilder 30 bzw. deren höchste Punkte an der Helldunkelgrenze und tragen zum Maximum in der horizontalen Mitte der Lichtverteilung bei. Würden wie bei herkömmlichen Systemen Lichtquellenabbilder für die Seitenstreuung zur Seite verschoben, würden sie in der Mitte der Lichtverteilung keinen Beitrag leisten können.

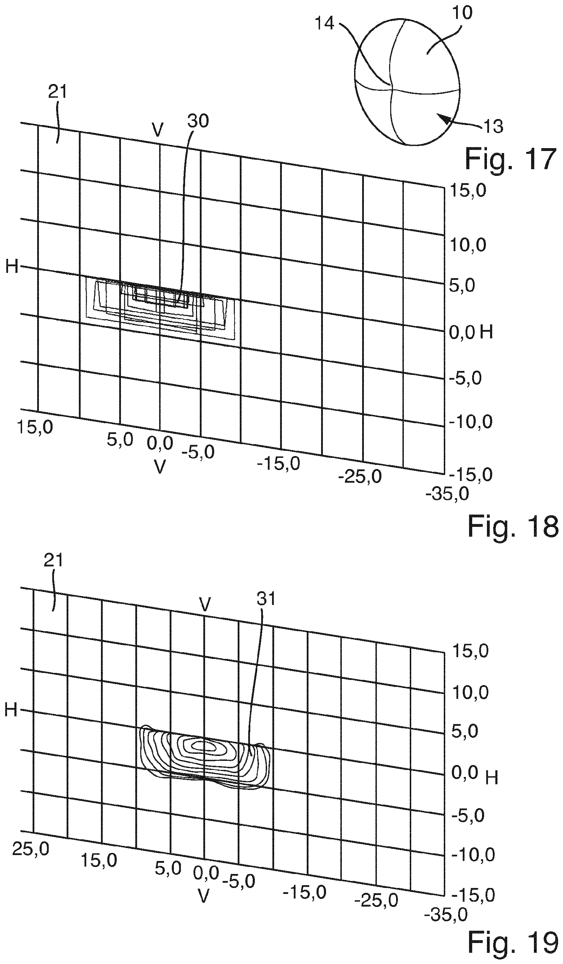

In Figur 17 ist beispielhaft eine abbildende Linse 10 in perspektivischer Ansicht gezeigt, die eine Lichtquelle 8 sowohl in vertikaler als auch in horizontaler Richtung verzerrt. Dazu ist auf der Lichtaustrittsseite 13 der Linse 10 etwa in der Mitte eine lokale Vertiefung 14 ausgebildet. Die mit der Linse 10 erzeugten, sowohl in vertikaler als auch in horizontaler Richtung verzerrten Lichtquellenabbilder 30 auf einem Messschirm 21 sind in Figur 18 gezeigt. Die entsprechende Lichtverteilung 31, die mit der Linse 10 aus Figur 17 durch Überlagerung der Lichtquellenabbilder 30 gemäß Figur 18 erzielt wird, ist auf einem Messschirm 21 in Figur 19 dargestellt.

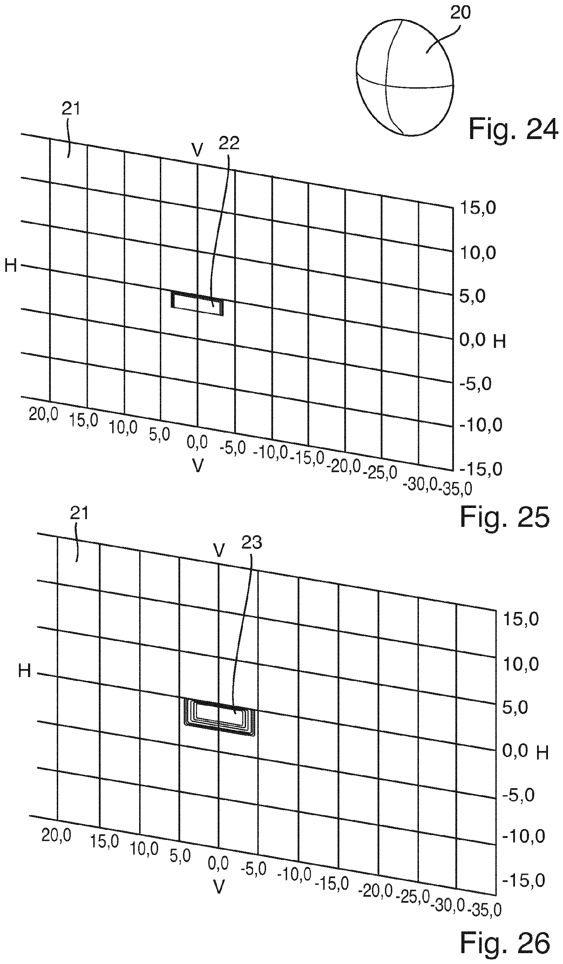

Als Vergleich zu der nach einem erfindungsgemäßen Verfahren berechneten Projektionslinse 10 aus Figur 17, zu den entsprechenden Lichtquellenabbildern 30 aus Figur 18 und zu der entsprechenden resultierenden Lichtverteilung 31 aus Figur 19 sind in Figur 24 eine aus dem Stand der Technik bekannte, herkömmliche Projektionslinse 20, in Figur 25 die mit der bekannten Linse 20 aus Figur 24 erzeugten herkömmlichen Lichtquellenabbilder 22 sowie in Figur 26 die mit der bekannten Linse 20 aus Figur 24 durch Überlagerung der Lichtquellenabbilder 22 gemäß Figur 25 erzielte herkömmliche Lichtverteilung 23 dargestellt. Es ist deutlich zu erkennen, dass die verschiedenen Lichtquellenabbilder 22 der herkömmlichen Linse 20 alle fast genau gleich groß sind. Dementsprechend fehlt es der resultierenden herkömmlichen Lichtverteilung 23 an einem stark ausgeprägten Intensitätsgradienten im Bereich der Helldunkelgrenze sowie an einer ausreichenden Vorfeld- und Seitenausleuchtung. Dies erkennt man daran, dass die Lichtverteilung 23 in vertikaler Richtung lediglich eine Erstreckung von etwa 0° bis -3° (fehlende Vorfeldausleuchtung) und in horizontaler Richtung eine Erstreckung von etwa von -4° bis +4° (fehlende Seitenausleuchtung) aufweist.

Die Möglichkeit, sowohl in horizontaler als auch in vertikaler Richtung Lichtquellenabbilder 30 zu verzerren, das heißt zu vergrößern beziehungsweise zu verkleinern, erlaubt es die nach einem erfindungsgemäßen Verfahren berechnete Projektionslinse 10 entsprechend den Anforderungen an die gewünschte Lichtverteilung 31 auszulegen. Große Lichtquellenabbilder 30 für das Vorfeld und/oder die Seitenstreuung, kleine Lichtquellenabbilder für den Kern der Lichtverteilung nahe der Helldunkelgrenze.

Da die unterschiedlich großen Lichtquellenabbilder 30 unterschiedlich auf Transformationen der Lichtquelle 8 reagieren, kann dieses Verhalten auch zur Realisierung von variablen Lichtverteilungen 31 genutzt werden. Diesbezüglich wird nochmals auf Figur 13 Bezug genommen, wo eine Lichtverteilung 31 für ein Abblendlicht mit horizontaler Helldunkelgrenze dargestellt ist. Die entsprechende Lichtverteilung für Fernlicht ist in Figur 20 gezeigt, wobei die Lichtquelle 8 lediglich bezüglich der Projektionslinse 20 im Wesentlichen senkrecht zur optischen Achse nach unten bewegt wurde. Es ist deutlich zu erkennen, dass sich die Lichtverteilung beim Umschalten zwischen Abblendlicht (vergleiche Figur 13) und Fernlicht (vergleiche Figur 20) im Kernbereich kaum verändert. Sie wird nur leicht nach oben in Richtung Horizont angehoben, was durchaus gewünscht ist. Der Vorfeldbereich, der mit großen Lichtquellenabbildern 30 erzeugt wurde, wird hingegen deutlich angehoben. Dies liegt insbesondere an den unterschiedlichen Abbildungsmaßstäben. Hätten alle Lichtquellenabbilder 30 eine ähnliche Größe würden sie sich bei einer Lageänderung der Lichtquelle 8 ähnlich deutlich bewegen.

Die nach einem erfindungsgemäßen Verfahren berechneten Projektionslinsen 10 zur Erzeugung unterschiedlich großer Lichtquellenabbilder 30 bieten die Möglichkeit, durch relative Bewegung der optischen Elemente zueinander die Lichtverteilung 31 nicht nur zu verschieben, sondern auch deren Form grundlegend zu verändern. Dies wäre zum Beispiel beim Umschalten von einer Abblendlichtverteilung in eine Fernlichtverteilung wünschenswert (sogenannte Bi-Funktion). Hierbei würden bei einer relativen Bewegung der Lichtquelle 8 nach oben oder unten die Lichtquellenabbilder 30 verschieden stark nach oben oder unten bewegt. Dies wird ausgenutzt, um beim Umschalten der Lichtverteilung 31 von Abblendlicht auf Fernlicht die Kernlichtverteilung nur wenig nach oben zu bewegen (von knapp unterhalb der Helldunkelgrenze) (vergleich Figur 13) zum Horizont (vergleiche Figur 20)) und die größeren Lichtquellenabbilder 30 mehr nach oben zu bewegen (vom nahen Vorfeld zum Bereich um und über dem Horizont), was vorteilhaft bezüglich der Blickrichtungsführung des Fahrers ist. Beim Abblendlicht liegt das Haupt-Interesse des Fahrers bei der Ausleuchtung im Vorfeld und geht bis zur Helldunkelgrenze, beim Fernlicht will der Fahrer aber auch Schilderbrücken o.ä. deutlich oberhalb des Horizonts anleuchten und erkennen können.

Weitere mögliche Ausgestaltungen der vorliegenden Erfindung sind die folgenden:
- Statt einer Lichtquelle 8 kann auch eine Auskoppelfläche eines lichttransportierenden Elements (Lichtleiter, Vorsatzoptik, etc.) verwendet werden.
- Zusätzlich zu der Lichtquelle 8 können eine oder mehrere abschattende Elemente (z.B. eine Blendenanordnung) im Brennpunkt der Projektionsoptik 10 eingesetzt werden, die den Gradienten der Lichtverteilung im Bereich der Helldunkelgrenze erhöhen zu können.
- Statt einer Lichtquelle 8 kann auch eine Lichtverteilung eines anderen optischen Systems (z. B. eines Reflektors, gegebenenfalls mit einer Blendenanordnung) verwendet werden. Die verschiedenen Abbildungsmaßstäbe können genutzt werden, um die Lichtverteilung 31 zu verändern, z.B. das Vorfeld aufzuweichen oder lokal das Licht stärker zu konzentrieren.
- Statt einer geraden horizontalen Helldunkelgrenze können selbstverständlich auch Helldunkelgrenzen erzeugt werden, die gekrümmt und/oder schräg (z. B. einen 15%-Anstieg beim Abblendlicht) verlaufen. Solche Helldunkelgrenzen erfüllen vorzugsweise die Anforderungen der ECE- und/oder der SAE-Regelungen.
- Statt alle Lichtquellenabbilder 30 direkt an die Helldunkelgrenze zu platzieren, wäre es auch möglich, lokal einige Lichtquellenabbilder 30 vertikal und/oder horizontal zu verschieben. Eine vertikale Verschiebung wäre wie bei herkömmlichen Reflexionssystemen sinnvoll, um Toleranzen der Lichtquelle 8 bezüglich deren Position zur Projektionslinse 10, bezüglich ihrer Ausgestaltung oder ähnliches besser beherrschen zu können, sodass die Toleranzen nicht zu einer unzulässigen Lichtverteilung 31 führen, beispielsweise weil die Intensitätswerte oberhalb der Helldunkelgrenze zu hoch sind.
- Statt einer glatten Lichtaustrittsfläche 13 der Linse 10 wäre es auch möglich, die Linse 10 mit lokalen Strukturen zu versehen, welche die Helldunkelgrenze aufweichen, das heißt zu einer Verunschärfung der Helldunkelgrenze führen.
- Es sei noch angemerkt, dass durch die nach einem erfindungsgemäßen Verfahren berechnete Projektionslinse statt einer Lichtverteilung 31 mit Helldunkelgrenze auch eine Lichtverteilung erzeugt werden könnte, die keine Helldunkelgrenze aufweist (z.B. eine Fernlichtverteilung). Die unterschiedlich großen Lichtquellenabbilder 30 sind auch für die Erzeugung von Fernlichtverteilungen sehr gut geeignet. Damit kann die Charakteristik der Lichtverteilung gezielt variiert werden. Gleich große Lichtquellenabbilder würden eine weitgehend konstante homogene Lichtverteilung erzeugen. Wenn man kleine und große Abbilder zur Verfügung hat, kann man die kleinen zum Erzeugen eines ausgeprägten "spitzen" Maximums in einem gewünschten Bereich der Lichtverteilung verwenden.
- Statt einer Lichtverteilung 31 mit Helldunkelgrenze, könnte auch eine Lichtverteilung erzeugt werden, die keine Helldunkelgrenze aufweist. Die verschieden großen Lichtquellenabbilder 30 sind auch zur Erzeugung von Lichtverteilungen für Signalfunktionen (z.B. Blinklicht, Positionslicht, Standlicht, Rücklicht, Tagfahrlicht, etc.) gut geeignet. Es ist möglich, dass eine solche Linse 10 von allen Bereichen der Lichtaustrittsfläche 13 in eine gewünschte Richtung Licht abstrahlt, was zu einem besonders homogenen Erscheinungsbild aus dieser Richtung führt.
- Statt bei der sogenannten Bi-Funktion die Lichtquelle 8 zu bewegen, wäre es auch möglich, eine oder mehrere weitere Lichtquellen an verschiedenen Positionen in dem Lichtmodul 7 anzuordnen und gezielt hinzu zuschalten und/oder abzuschalten.

Zusammenfassend beschreibt die vorliegende Erfindung Projektionslinsen 10, die durch besondere Formgebung der Lichteintrittsfläche 12 und/oder der Lichtaustrittsfläche 13 unterschiedlich große Lichtquellenabbilder 30 erzeugen können. Diese Lichtquellenabbilder 30 können entsprechend der gewünschten Aufgabe innerhalb der Lichtverteilung 31 nahezu beliebig platziert werden.

Eine konventionelle Projektionslinse 20, wie sie bspw. in Figur 21 dargestellt ist, hat den Nachteil, dass das Vorfeld und/ oder Seitenbereiche der Lichtverteilung 23 (vgl. Figur 23) nur unzureichend ausgeleuchtet werden, da sie ähnlich große Lichtquellenabbilder 22 (vgl. Figur 22) erzeugt und alle Lichtquellenabbilder 22 knapp unterhalb der Helldunkelgrenze positioniert sind. Durch eine ebenfalls aus dem Stand der Technik bekannte Projektionslinse 20, wie sie bspw. in Figur 1 dargestellt ist, werden die ähnlich großen Lichtquellenabbilder in der Mitte der Lichtverteilung 23 (vgl. Figur 2), etwa im Bereich der Vertikalen VV auf dem Messschirm 21, abgesenkt, um das Vorfeld der Lichtverteilung 23 besser ausleuchten zu können. Die abgesenkten Lichtquellenabbilder fehlen dann allerdings bei der Erzeugung der Helldunkelgrenze, die relativ weich ist und nicht die häufig geforderte Schärfe (großer Gradient der Lichtintensität) aufweist.

Durch die nach einem erfindungsgemäßen Verfahren berechnete Projektionslinse 10 kann sowohl das Vorfeld (und/oder Seitenbereiche der Lichtverteilung) befriedigend ausgeleuchtet werden als auch eine scharfe Helldunkelgrenze erzeugt werden. Dies wird dadurch ermöglicht, dass zumindest einige der Lichtquellenabbilder 30 durch bereichsweises Verändern des Abbildungsmaßstabs der Linse 10 vergrößert werden, so dass die großen Lichtquellenabbilder 30 mit ihren oberen Punkten zwar nach wie vor noch bis dicht an die Helldunkelgrenze herangeführt werden können, andererseits aber mit ihren unteren Bereichen so weit in das Vorfeld der Lichtverteilung 31 (und/oder in Seitenbereiche der Lichtverteilung) ragen, dass sie das Vorfeld bzw. die Seitenbereiche gut ausleuchten können.

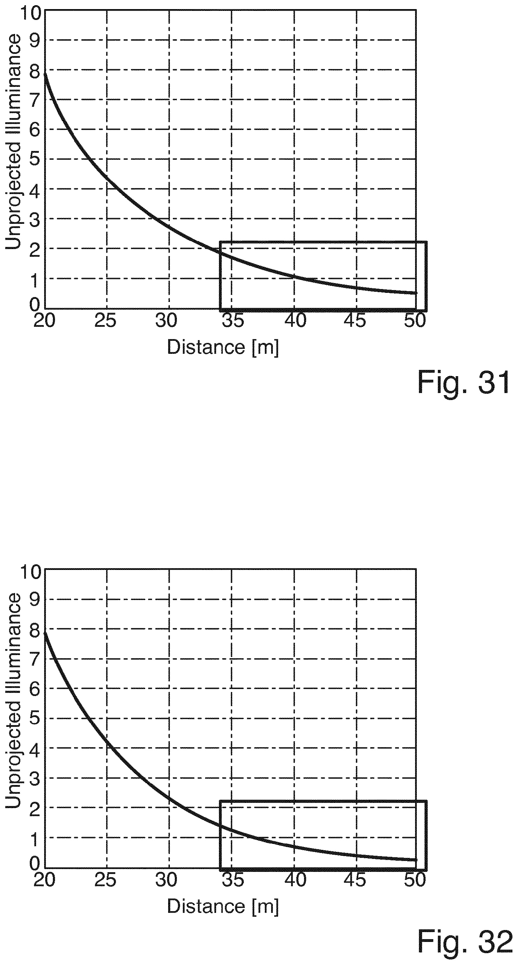

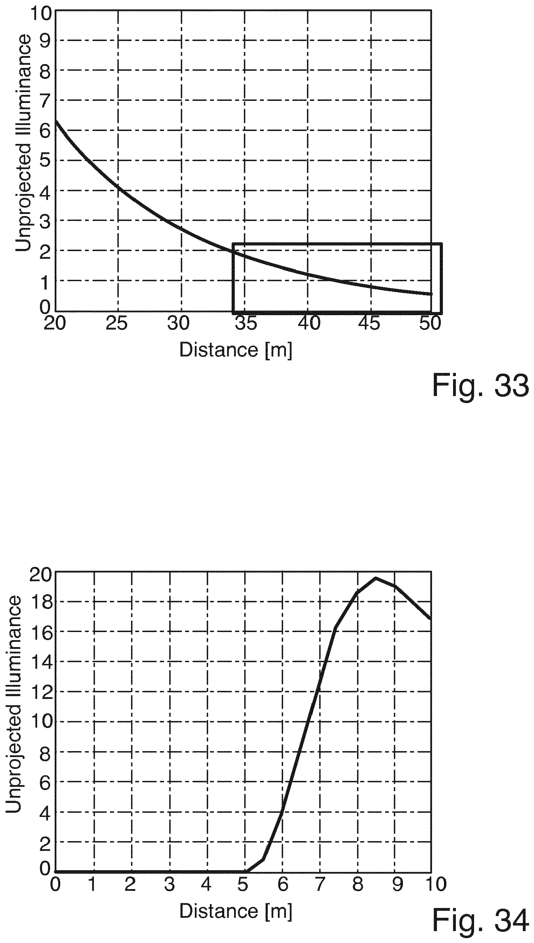

Nachfolgend werden anhand der Figuren 28 bis 30 die wesentlichen Vorteile und Merkmale der nach einem erfindungsgemäßen Verfahren berechneten Projektionslinse 10 nochmals anhand eines Vergleichs verschiedener Lichtverteilungen erläutert. Figur 28 zeigt eine mit einer aus dem Stand der Technik bekannten Linse 20 gemäß Figur 21 erzielbare Lichtverteilung 23. Diese hat eine recht gute Reichweite, was daran zu erkennen ist, dass der Lichtschwerpunkt 23* weit vor dem Fahrzeug, d.h. dicht an der Helldunkelgrenze liegt. Die entsprechende Intensitätsverteilung für eine Entfernung von 20 bis 50 Meter vor dem Fahrzeug ist in Figur 31 dargestellt. Allerdings realisiert die Lichtverteilung 23 aus Figur 28 nur eine beschränkte Vorfeldausleuchtung, was daran zu erkennen ist, dass die Lichtverteilung 23 nur bis etwa 6 Meter an das Fahrzeug heranreicht. Die entsprechende Intensitätsverteilung für eine Entfernung von 0 bis 10 Meter vor dem Fahrzeug ist in Figur 34 dargestellt.

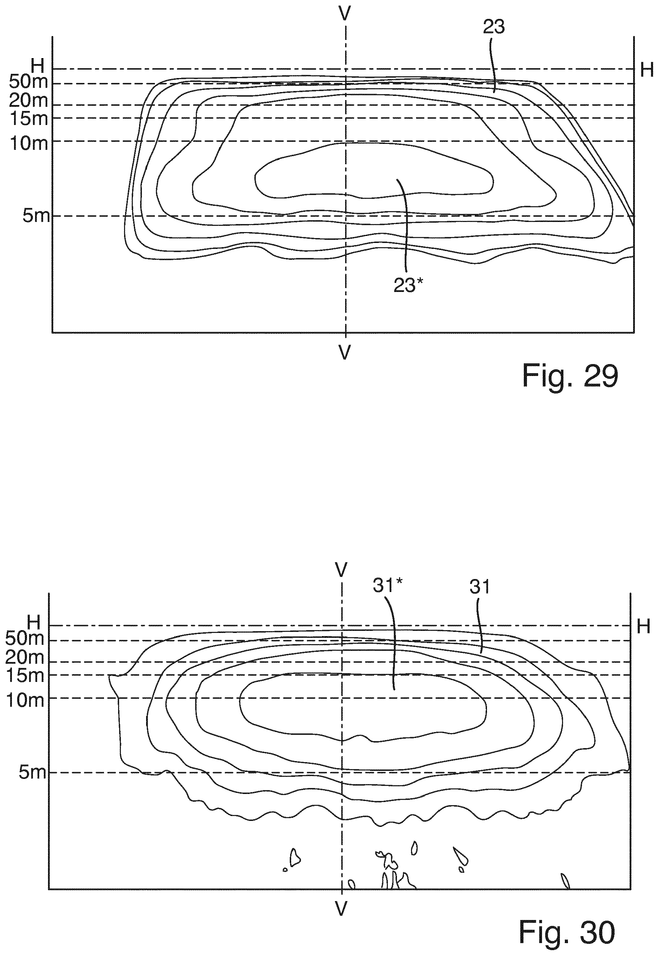

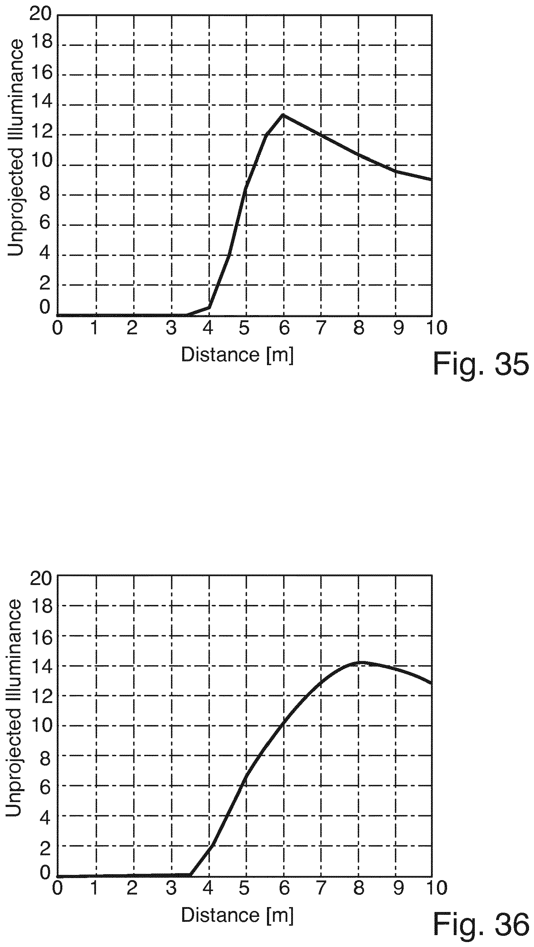

Figur 29 zeigt eine mit einer aus dem Stand der Technik bekannten Linse 20 gemäß Figur 1 erzielbare Lichtverteilung 23. Diese hat eine recht schlechte Reichweite, was daran zu erkennen ist, dass der Lichtschwerpunkt 23* relativ nah vor dem Fahrzeug, d.h. weit unterhalb der Helldunkelgrenze liegt. Die entsprechende Intensitätsverteilung für eine Entfernung von 20 bis 50 Meter vor dem Fahrzeug ist in Figur 32 dargestellt. Allerdings realisiert die Lichtverteilung 23 aus Figur 29 eine gute Vorfeldausleuchtung, was daran zu erkennen ist, dass die Lichtverteilung 23 bis etwa 4 Meter an das Fahrzeug heranreicht. Die entsprechende Intensitätsverteilung für eine Entfernung von 0 bis 10 Meter vor dem Fahrzeug ist in Figur 35 dargestellt.

Figur 30 zeigt eine mit einer nach einem erfindungsgemäßen Verfahren berechneten Linse 10 erzielbare Lichtverteilung 31. Diese hat eine recht gute Reichweite, was daran zu erkennen ist, dass der Lichtschwerpunkt 31* weit vor dem Fahrzeug, d.h. dicht an der Helldunkelgrenze liegt. Die entsprechende Intensitätsverteilung für eine Entfernung von 20 bis 50 Meter vor dem Fahrzeug ist in Figur 33 dargestellt. Außerdem realisiert die Lichtverteilung 31 aus Figur 30 eine gute Vorfeldausleuchtung, was daran zu erkennen ist, dass die Lichtverteilung 31 bis weniger als 4 Meter an das Fahrzeug heranreicht. Die entsprechende Intensitätsverteilung für eine Entfernung von 0 bis 10 Meter vor dem Fahrzeug ist in Figur 36 dargestellt.

## Patentansprüche

1. Verfahren zum Berechnen der Oberflächen (12, 13) von optischen Linsen (10), **gekennzeichnet durch**
a) Vorgeben einer gewünschten Lichtverteilung, die durch durch die berechnete Linse (10) hindurchtretendes Licht erzeugt werden soll,
b) Deformieren einer erste Oberfläche (13) der Linse (10) mit dem Ziel, unterschiedlich große Lichtquellenabbilder in der Lichtverteilung zu erzeugen,
c) Deformieren einer der ersten Oberfläche (13) gegenüberliegenden zweiten Oberfläche (12) der Linse (10) mit dem Ziel, alle Lichtquellenabbilder so zu verschieben, dass sie mit ihrem jeweils höchsten Punkt unmittelbar an oder auf einer Helldunkelgrenze einer resultierenden Lichtverteilung liegen, die durch die Linse (10) mit den deformierten Oberflächen (12, 13) erzielt wird,
d) Ermitteln einer Güte der resultierenden Lichtverteilung durch einen Vergleich mit der vorgegebenen Lichtverteilung,
e) falls die Güte oberhalb eines vorgebbaren Grenzwerts liegt, Abspeichern der berechneten Oberflächen (12, 13) für die Linse (10) und Beenden des Verfahrens,
f) sonst erneutes Deformieren der ersten Oberfläche (13) mit dem Ziel, eine größere oder kleiner Bündelung der Lichtquellenabbilder in der Lichtverteilung zu erzeugen,
g) erneutes Deformieren der zweiten Oberfläche (12) mit dem Ziel, alle Lichtquellenabbilder so zu verschieben, dass sie mit ihrem jeweils höchsten Punkt an oder auf der Helldunkelgrenze der resultierenden Lichtverteilung liegen,
h) Wiederholen der Schritte f) und g) so lange bis die Güte der resultierenden Lichtverteilung oberhalb des Grenzwerts liegt, und
i) Abspeichern der berechneten Oberflächen (12, 13) für die Linse (10) und Beenden des Verfahrens.

2. Verfahren nach Anspruch 1, **dadurch gekennzeichnet, dass** die erste Oberfläche (12) eine Lichtaustrittsfläche der Linse (10) ist, durch die das Licht aus der Linse (10) austritt, und dass die zweite Oberfläche (13) eine Lichteintrittsfläche der Linse (10) ist, durch die das Licht in die Linse (10) eintritt.

3. Verfahren nach Anspruch 1 oder 2, **dadurch gekennzeichnet, dass** in dem Schritt f) beim erneuten Deformieren der ersten Oberfläche (13) ein durch einen deformierten Abschnitt der Linse (10) erzeugter Abbildungsmaßstab geändert wird.

4. Verfahren nach einem der vorhergehenden Ansprüche, **dadurch gekennzeichnet, dass** die Güte der Lichtverteilung mittels eines Optimierungsprogramms ermittelt wird.

5. Verfahren nach Anspruch 4, **dadurch gekennzeichnet, dass** der Grenzwert durch eine vorgegebene Anzahl von Optimierungsdurchläufen definiert wird.

6. Verfahren nach Anspruch 4, **dadurch gekennzeichnet, dass** das Optimierungsprogramm eine Zielfunktion zur Beschreibung der Lichtverteilung, die durch die Linse (10) mit den deformierten Oberflächen (12, 13) erzielt wird, nutzt, wobei die Zielfunktion durch die Deformationen der Oberflächen (12, 13) minimiert wird.

7. Verfahren nach Anspruch 6, **dadurch gekennzeichnet, dass** als Zielfunktion eine Fehlerquadratsumme eingesetzt wird.

8. Verfahren nach Anspruch 7, **dadurch gekennzeichnet, dass** zur Minimierung der Fehlerquadratsumme die Methode der kleinsten Quadrate verwendet wird.

9. Verfahren nach Anspruch 8, **dadurch gekennzeichnet, dass** Intensitätswerte der vorgegebenen Lichtverteilung und der Lichtverteilung, die durch die Linse (10) mit den deformierten Oberflächen (12, 13) erzielt wird, in einem identischen Pixelraster für ausgewählte Pixel miteinander verglichen und die Fehlerquadratsummen jeweils aus dem Quadrat der Differenz der Intensitätswerte in einem bestimmten Pixel berechnet werden.

10. Computerprogramm zur Ausführung auf einem Prozessor eines Computers, **dadurch gekennzeichnet, dass** das Computerprogramm zur Ausführung eines Verfahrens nach einem der Ansprüche 1 bis 9 programmiert ist, wenn es auf dem Prozessor abläuft.

## Claims

1. Method for calculating the surfaces (12, 13) of optical lenses (10), **characterized by**
a) specifying a desired light distribution which can be generated by light passing through the calculated lens (10),
b) deforming a first surface (13) of the lens (10) with the aim to create light source images of different sizes in the light distribution,
c) deforming a second surface (12) of the lens (10) which is disposed opposite of the first surface (13) with the aim of shifting all light source images so that they are disposed with their highest point immediately at or on a light-dark boundary of a resulting light distribution which is achieved by the lens (10) having the deformed surfaces (12, 13),
d) determining a quality of the resulting light distribution by comparison with the specified light distribution,
e) if the quality exceeds a predeterminable limit value, storing the calculated surfaces (12, 13) for the lens (10) and terminating the procedure,
f) otherwise deforming the first surface (13) again with the aim of achieving a greater or lesser bundling of the light source images in the light distribution,
g) deforming again the second surface (12) with the aim to shift all light source images in such a way that they are disposed with their respective highest point at or on the light-dark boundary of the resulting light distribution,
h) repeating steps (f) and (g) until the quality of the resulting light distribution exceeds the limit value, and
i) storing the calculated surfaces (12, 13) for the lens (10) and terminating the procedure.

2. Method according to claim 1, **characterized in that** the first surface (12) is a light-emitting surface of the lens (10) through which the light exits the lens (10), and **in that** the second surface (13) is a light entry surface of the lens (10) through which the light enters the lens (10).

3. Method according to claim 1 or 2, **characterised in that** in step f), when the deformation of the first surface (13) is repeated, a scaling factor generated by a deformed portion of the lens (10) is changed.

4. Method according to one of the preceding claims, **characterized in that** the quality of the light distribution is determined using an optimization program.

5. Method according to claim 4, **characterized in that** the limit value is defined by a predetermined number of optimization runs.

6. Method according to claim 4, **characterised in that** the optimization program has an objective function for describing the light distribution, which is achieved by the lens (10) having the deformed surfaces (12, 13), wherein the objective function is minimized by the deformations of the surfaces (12, 13).

7. Method according to claim 6, **characterised in that** an error square sum is used as the objective function.

8. Method according to claim 7, **characterized in that** to minimize the error square sum, the method of the least squares is used.

9. Method according to claim 8, **characterised in that** intensity values of the specified light distribution and the light distribution which is achieved by the lens (10) having the deformed surfaces (12, 13), are compared with each other in an identical pixel grid for selected pixels, and **in that** the error square sums are calculated from the square of the difference of the intensity values in a particular pixel.

10. Computer program for execution on a processor of a computer, **characterized in that** the computer program is programmed for executing a method according to one of claims 1 to 9 when it runs on the processor.

## Revendications

1. Procédé de calcul des surfaces (12, 13) de lentilles optiques (10), **caractérisé par** les étapes suivantes:
a) prédétermination d'une répartition de lumière désirée, qui doit être produite par la lumière traversant la lentille (10) calculée,
b) déformation d'une première surface (13) de la lentille (10) dans le but de produire des images de sources lumineuses de dimensions différentes dans la répartition de lumière,
c) déformation d'une seconde surface (12) opposée à la première surface (13) de la lentille (10) dans le but de déplacer toutes les images de sources lumineuses de telle sorte que leur point respectivement le plus haut se situe directement au niveau de ou sur une limite clair-obscur d'une répartition de lumière résultante qui est obtenue par la lentille (10) ayant les surfaces déformées (12, 13),
d) détermination d'une qualité de la répartition de lumière résultante par une comparaison avec la répartition de lumière prédéterminée,
e) dans le cas où la qualité se situe au-dessus d'une valeur limite prédéterminable, mémorisation des surfaces (12, 13) calculées pour la lentille (10) et fin du procédé,
f) sinon, nouvelle déformation de la première surface (13) dans le but de produire une concentration plus grande ou moins grande des images de sources lumineuses dans la répartition de lumière,
g) nouvelle déformation de la seconde surface (12) dans le but de déplacer toutes les images de sources lumineuses de telle sorte que leur point respectivement le plus haut se situe directement au niveau de ou sur une limite clair-obscur d'une répartition de lumière résultante,
h) répétition des étapes f) et g) jusqu'à ce que la qualité de la répartition de lumière résultante se situe au-dessus de la valeur limite, et
i) mémorisation des surfaces (12, 13) calculées pour la lentille (10) et fin du procédé.

2. Procédé selon la revendication 1, **caractérisé en ce que** la première surface (12) est une surface de sortie de lumière de la lentille (10), par laquelle la lumière sort de la lentille (10), et **en ce que** la seconde surface (13) est une surface d'entrée de lumière de la lentille (10), par laquelle la lumière pénètre dans la lentille (10).

3. Procédé selon la revendication 1 ou 2, **caractérisé en ce qu'**à l'étape f), lors de la nouvelle déformation de la première surface (13), une échelle de l'image générée par une partie déformée de la lentille (10) est modifiée.

4. Procédé selon l'une des revendications précédentes, **caractérisé en ce que** la qualité de la répartition de lumière est déterminée à l'aide d'un programme d'optimisation.

5. Procédé selon la revendication 4, **caractérisé en ce que** la valeur limite est définie par un nombre prédéterminé de passes d'optimisation.

6. Procédé selon la revendication 4, **caractérisé en ce que** le programme d'optimisation utilise une fonction cible pour la description de la répartition de lumière qui est obtenue par la lentille (10) ayant les surfaces déformées (12, 13), la fonction cible étant minimisée par les déformations des surfaces (12, 13).

7. Procédé selon la revendication 6, **caractérisé en ce qu'**est utilisée comme fonction cible une somme des carrés des erreurs.

8. Procédé selon la revendication 7, **caractérisé en ce qu'**est utilisée, pour la minimisation de la somme des carrés des erreurs, la méthode des moindres carrés.

9. Procédé selon la revendication 8, **caractérisé en ce que** des valeurs d'intensité de la répartition de lumière prédéterminée et de la répartition de lumière obtenue par la lentille (10) ayant les surfaces déformées (12, 13) sont comparées entre elles dans une grille de pixels identique pour des pixels sélectionnés, et les sommes des carrés des erreurs sont calculées respectivement à partir du carré de la différence des valeurs d'intensité dans un pixel donné.

10. Programme informatique pour exécution sur un processeur d'un ordinateur, **caractérisé en ce que** le programme informatique est programmé pour l'exécution d'un procédé selon l'une des revendications 1 à 9 lorsqu'il s'exécute sur le processeur.
